# EUROPEAN PATENT SPECIFICATION

(11) **EP 2 426 765 B1**
(45) Date of publication and mention of the grant of the patent: **09.11.2016**
(21) Application number: 10769436.6
(22) Date of filing: 10.03.2010
(51) Int. Cl.: H01M 8/04, H01M 8/00

(54) **FUEL CELL SYSTEM AND WATER DRAINING METHOD FOR FUEL CELL SYSTEM**
BRENNSTOFFZELLENSYSTEM UND WASSERABLASSVERFAHREN FÜR DAS BRENNSTOFFZELLENSYSTEM
SYSTÈME DE PILE À COMBUSTIBLE ET PROCÉDÉ DE DRAINAGE D'EAU POUR SYSTÈME DE PILE À COMBUSTIBLE

(30) Priority: 28.04.2009 JP 2009109180; 09.03.2010 JP 2010051481
(43) Date of publication of application: 07.03.2012
(73) Proprietor: Panasonic Corporation, Kadoma-shi Osaka 571-8501 (JP)
(72) Inventor: MORITA, Junji, 1-61, Shiromi 2-chome, Chuo-ku, Osaka-shi, Osaka 540-6207 (JP); NAKAMURA, Akinari, 1-61, Shiromi 2-chome, Chuo-ku, Osaka-shi, Osaka 540-6207 (JP); YUKIMASA, Akinori, 1-61, Shiromi 2-chome, Chuo-ku, Osaka-shi, Osaka 540-6207 (JP); URATA, Takayuki, 1-61, Shiromi 2-chome, Chuo-ku, Osaka-shi, Osaka 540-6207 (JP)
(74) Representative: Grünecker Patent- und Rechtsanwälte PartG mbB
(86) International application number: PCT/JP2010/001678
(87) International publication number: WO 2010/125734

(56) References cited:
- EP-A1- 1 487 045
- WO-A1-2005/112175
- JP-A- 2004 179 077
- JP-A- 2004 199 981
- JP-A- 2006 107 893
- JP-A- 2006 228 606
- JP-A- 2008 084 730
- JP-A- 2009 009 808
- JP-A- 2009 016 295
- US-A1- 2003 190 502
- US-A1- 2009 011 299

## Description

### Technical Field

The present invention relates to a fuel cell system including, on a water passage, a replaceable device, such as a water purifier, which needs to be replaced periodically, and a device, such as a temperature sensor, which is replaced when it breaks, and also relates to a method for removing water of the fuel cell system including the above devices.

### Background Art

Regarding conventional fuel cell systems, proposed is to remove water from a cooling water passage of a fuel cell when the system requires maintenance (see PTL 1, for example).

### Citation List

### Patent Literature

PTL 1: Japanese Laid-Open Patent Application Publication No. 2007-134206 (paragraph [0033])

### Summary of Invention

### Technical Problem

Regarding the fuel cell system described in PTL 1, removing the water in the cooling water passage at the time of maintenance is disclosed. However, the fuel cell system includes water passages in addition to the cooling water passage, and how to remove the water from these water passages depending on the situations at the time of maintenance is not considered.

The present invention was made to solve the conventional problem, and an object of the present invention is to provide a fuel cell system capable of removing water depending on the situations at the time of maintenance and a method for removing the water of the fuel cell system.

### Solution to Problem

To solve the above conventional problem, a fuel cell system of the present invention is defined according to claim 5.

Moreover, a method for removing water of a fuel cell system of the present invention is defined according to claim 1.

The above object, other objects, features and advantages of the present invention will be made clear by the following detailed explanation of preferred embodiments with reference to the attached drawings.

### Advantageous Effects of Invention

In accordance with a fuel cell system of the present invention and a method for removing water of the fuel cell system, only the water in a block, from which the water needs to be removed, of a water circulation passage is discharged to the outside of the water circulation passage. Therefore, the amount of time for a water filling operation performed after the water removing operation is reduced. Thus, the maintenance can be completed more quickly.

### Brief Description of Drawings

[Fig. 1] Fig. 1 is a block diagram schematically showing a schematic configuration of a fuel cell system according to Embodiment 1 of the present invention.
[Fig. 2] Fig. 2 is a schematic diagram showing a schematic configuration of an operating unit of the fuel cell system shown in Fig. 1.
[Fig. 3] Fig. 3 is a schematic diagram showing a schematic configuration of the operating unit of the fuel cell system shown in Fig. 1.
[Fig. 4] Fig. 4 is a flow chart schematically showing a water removing process of a first water circulation passage of the fuel cell system shown in Fig. 1.
[Fig. 5] Fig. 5 is a flow chart schematically showing a water removal abnormality detecting sequence of the first water circulation passage in the water removing process of the fuel cell system shown in Fig. 4.
[Fig. 6] Fig. 6 is a flow chart schematically showing the water removing process of a second water circulation passage of the fuel cell system shown in Fig. 1.
[Fig. 7] Fig. 7 is a flow chart schematically showing the water removal abnormality detecting sequence of the second water circulation passage in the water removing process of the fuel cell system shown in Fig. 6.
[Fig. 8] Fig. 8 is a flow chart schematically showing the water removing process of all blocks of a water circulation passage of the fuel cell system shown in Fig. 1.
[Fig. 9] Fig. 9 is a flow chart schematically showing the water removal abnormality detecting sequence of the water circulation passage in the water removing process of the fuel cell system shown in Fig. 8.
[Fig. 10] Fig. 10 is a block diagram schematically showing a schematic configuration of the fuel cell system according to Embodiment 2 of the present invention.
[Fig. 11] Fig. 11 is a flow chart schematically showing the water removing process of an exhaust heat recovered water passage (water passage) of the fuel cell system shown in Fig. 10.
[Fig. 12] Fig. 12 is a flow chart schematically showing the water removing process of a hot water tank of the fuel cell system shown in Fig. 10.
[Fig. 13] Fig. 13 is a block diagram schematically showing a schematic configuration of the fuel cell system according to Embodiment 3 of the present invention.
[Fig. 14] Fig. 14 is a flow chart showing a series of steps including the water removing operation of the fuel cell system shown in Fig. 13.
[Fig. 15] Fig. 15 is a block diagram schematically showing a schematic configuration of the fuel cell system of Modification Example 4.
[Fig. 16] Fig. 16 is a flow chart showing a series of steps including the water removing operation of the fuel cell system shown in Fig. 15.
[Fig. 17] Fig. 17 is a block diagram schematically showing a schematic configuration of the fuel cell system according to Embodiment 4 of the present invention.
[Fig. 18] Fig. 18 is a flow chart schematically showing the water removing process of all the blocks of the water circulation passage of the fuel cell system shown in Fig. 17.
[Fig. 19] Fig. 19 is a flow chart schematically showing the water removal abnormality detecting sequence of the water circulation passage in the water removing process of the fuel cell system shown in Fig. 18.

### Description of Embodiments

A fuel cell system according to embodiments of the present invention and a method for removing water of the fuel cell system will be specifically explained.

A fuel cell system of a first aspect includes: a fuel cell; a water circulation passage through which water circulates, the water being necessary for an operation of the fuel cell system; a separation mechanism configured to divide the water circulation passage into a plurality of blocks when removing the water and to divide the water in the water circulation passage among the blocks; water discharge passages respectively connected to the blocks; and water discharge valves respectively provided on the water discharge passages.

With this, the water is removed from only the block, from which the water needs to be removed, of the water circulation passage. Therefore, the amount of time for a water filling operation performed after the water removing operation is reduced. Thus, the maintenance can be completed more quickly.

Here, the above invention includes both a case where the water removing operation of only the block, from which the water needs to be removed, of the water circulation passage is executed in accordance with the water removal mode selected by the operator through the command acquiring unit and a case where the water removing operation of only the block, from which the water needs to be removed, is executed automatically without the selection of the water removal mode through the command acquiring unit.

Moreover, in the present invention, the "water removal" denotes that the water in a predetermined block of the water circulation passage is discharged from the water discharge passage to the outside of the fuel cell system by opening the water discharge valve.

Here, at least one "water discharge valve" is provided on each block.

Moreover, the fuel cell system of a second aspect is configured such that in the fuel cell system of the first aspect, the water circulation passage includes a first water circulation passage through which cooling water for cooling the fuel cell circulates and a second water circulation passage through which the cooling water discharged from the first water circulation passage is purified and returns to the first water circulation passage, and the separation mechanism is constituted by a first water tank to which the first water circulation passage and the second water circulation passage are connected and in which the cooling water is stored.

Moreover, the fuel cell system of a third aspect is configured such that the fuel cell system of the second aspect further includes: a first water discharge passage provided at the first water circulation passage; a first water discharge valve provided on the first water discharge passage; a second water discharge passage provided at the second water circulation passage; and a second water discharge valve provided on the second water discharge passage.

Moreover, the fuel cell system of a fourth aspect is configured such that the fuel cell system of the second aspect further includes: at least one of a first maintenance part provided on the first water circulation passage and a first abnormality detector provided on the first water circulation passage to detect an abnormality of the first water circulation passage; and at least one of a second maintenance part provided on the second water circulation passage and a second abnormality detector provided on the second water circulation passage to detect an abnormality of the second water circulation passage.

Here, the "first maintenance part" is a part which is periodically maintained (checked/replaced). Examples of the "first maintenance part" are a filter provided in a second water pump configured to cause the cooling water to flow and a filter configured to capture impurities in the first water tank. The "second maintenance part" is a part which is periodically maintained (checked/replaced). Examples of the "second maintenance part" are a purifier configured to purify recovered water recovered from an exhaust gas of the fuel cell, a filter configured to capture impurities in a recovered water tank configured to store the recovered water, and a filter provided in a first water pump configured to cause the purified water to flow.

Examples of the first abnormality detector are a temperature detector configured to detect the temperature of the cooling water, a water level detector configured to detect the water level in the first water tank, and a rotation detector of the second water pump. Similarly, examples of the second abnormality detector are a temperature detector configured to detect the temperature of the recovered water, a water level detector of the recovered water tank, and a rotation detector of the first water pump.

Moreover, the fuel cell system of a fifth aspect is configured such that in the fuel cell system of the first aspect, the water circulation passage includes: a hot water tank configured to store the water having recovered exhaust heat of the fuel cell system; and a water passage through which water flows, the water being taken out from the hot water tank, recovering the exhaust heat of the fuel cell system, and returning to the hot water tank, and the separation mechanism includes: a first on-off valve provided on a portion, through which the water having not yet recovered the exhaust heat of the fuel cell system flows, of the water passage; and a second on-off valve provided on a portion, through which the water having recovered the exhaust heat of the fuel cell system flows, of the water passage.

Moreover, the fuel cell system of a sixth aspect is configured such that the fuel cell system of the fifth aspect further includes: a third water discharge passage provided at the water passage; a third water discharge valve provided on the third water discharge passage; a fourth water discharge passage provided at the hot water tank; and a fourth water discharge valve provided on the fourth water discharge passage.

Moreover, the fuel cell system of a seventh aspect is configured such that the fuel cell system of the fifth aspect further includes: a third abnormality detector provided on the water passage to detect an abnormality of the water passage; and a fourth abnormality detector provided on the hot water tank.

Here, examples of the "third abnormality detector" are a temperature detector configured to detect the temperature of the water flowing through the water passage and a rotation detector of the third water pump configured to cause the water in the water passage to flow. Examples of the "fourth abnormality detector" are a temperature detector configured to detect the temperature of the water in the hot water tank and a water level detector configured to detect the water level in the hot water tank.

Moreover, the fuel cell system of an eighth aspect is configured such that in the fuel cell system of the first aspect, the water circulation passage includes: a second water tank configured to store recovered water recovered from an exhaust gas of the fuel cell; a first water tank configured to store, as cooling water for cooling the fuel cell, purified water obtained by purifying the recovered water; a first connection passage connecting the first water tank and the second water tank; a first branched passage branching from the first connection passage; and a fifth water discharge valve provided on the first branched passage, a purifier is provided on the first connection passage, and the first branched passage is configured such that the water in the passage including the purifier is removed by opening the fifth water discharge valve.

Moreover, the fuel cell system of a ninth aspect is configured such that in the fuel cell system of the eighth aspect, the second water tank is provided above the purifier, and the fuel cell system of the eighth aspect further includes: a water level detector configured to detect a water level in the second water tank; and a controller configured to open the fifth water discharge valve to remove the water in the block including the purifier and the second water tank, and in a water filling operation performed after completion of the removal of the water in the above block, detect completion of water filling of the purifier by an increase in the water level detected by the water level detector.

The fuel cell system of a tenth aspect is configured such that the fuel cell system of the eighth aspect further includes: a water level detector configured to detect a water level in the first water tank; and a controller configured to open the fifth water discharge valve to remove the water in the block including the purifier and the second water tank, and in a water filling operation performed after completion of the removal of the water in the above block, detect completion of water filling of the purifier by an increase in the water level detected by the water level detector.

With this, in the water filling operation performed after the execution of the water removal of the block including the purifier, the completion of the water filling of this block can be confirmed.

Here, the "controller" may be constituted by a single controller which performs centralized control or may be constituted by a plurality of controllers which cooperate to perform distributed control. Examples of the "controller" are a microprocessor and a CPU.

Moreover, the fuel cell system of an eleventh aspect is configured such that the fuel cell system of the eighth aspect further includes a water pump provided on the first connection passage to cause the recovered water in the second water tank to flow to the first water tank, wherein the first branched passage branches from a portion of the first connection passage, the portion being located on the purifier side of the water pump.

Moreover, the fuel cell system of a twelfth aspect is configured such that the fuel cell system of any one of the eighth to eleventh aspects further includes a second connection passage through which the water having overflowed from the first water tank returns to the second water tank, wherein: the second water tank is open to the atmosphere; and the first water tank is open to the atmosphere through the second connection passage and the second water tank.

Moreover, the fuel cell system of a thirteenth aspect is configured such that the fuel cell system of any one of the first to twelfth aspects further includes: a command acquiring unit configured to receive a set command of the block of the water circulation passage by a manual operation of an operator, the block being subjected to a water removing process; and a controller configured to open the water discharge valve provided on the water discharge passage (hereinafter referred to as "water removal water discharge passage") connected to the block, which is subjected to the water removing process based on the command of the command acquiring unit, such that the water is discharged from the water removal water discharge passage.

Here, the "command acquiring unit" is constituted by a remote controller configured to control the operation of the fuel cell system by the operation of the operator. Then, the operator operates buttons provided on the remote controller to input a signal indicating the selected water removal mode (water discharge valve control mode) to the controller.

Moreover, the fuel cell system of a fourteenth aspect is configured such that the fuel cell system of any one of the first to fourth and eight to twelfth aspects further includes: a command acquiring unit configured to receive a set command of the block of the water circulation passage by a manual operation of an operator, the block being subjected to a water removing process; and a controller configured to start detecting an abnormality of the water removing process corresponding to the block which is subjected to the water removing process based on the command of the command acquiring unit.

Moreover, the fuel cell system of a fifteenth aspect is configured such that the fuel cell system of the fourteenth aspect further includes: a water tank provided on the block which is subjected to the water removing operation based on the command of the command acquiring unit; and a water level detector configured to detect a water level in the water tank, wherein the controller detects the abnormality based on the water level detected by the water level detector.

Further, the fuel cell system of a sixteenth aspect is configured such that the fuel cell system of the second aspect further includes: a hydrogen generator configured to generate a hydrogen-containing gas by using a raw material and water; a water supply unit configured to supply the water to the hydrogen generator; a water supply passage through which the water supplied from the water supply unit to the hydrogen generator flows; a second water tank provided on the second water circulation passage; a second branched passage which branches from the water supply passage and through which the water supplied to the second water tank flows; a switching unit configured to switch a destination to which the water supplied from the water supply unit flows, between the hydrogen generator and the second water tank; and a controller configured to activate the water supply unit and causes the switching unit to switch the destination, to which the water supplied from the water supply unit flows, to the second water tank in the water removing process of the second water circulation passage or in the water removing process of all the passages of the water circulation passage.

Moreover, a method for removing water of the fuel cell system of the first aspect is a method for removing water of a fuel cell system, the fuel cell system including: a fuel cell; a water circulation passage through which water circulates, the water being necessary for an operation of the fuel cell system; a separation mechanism configured to divide the water circulation passage into a plurality of blocks when removing the water and to divide the water in the water circulation passage among the blocks; water discharge passages respectively connected to the blocks; and water discharge valves respectively provided on the water discharge passages, the method including the step of removing the water from only the block in which a part requiring maintenance is provided or the block whose abnormality is detected, by opening the water discharge valve of the water discharge passage connected to the block.

With this, the water is removed from only the block, from which the water needs to be removed, of the water circulation passage. Therefore, the amount of time for the water filling operation performed after the water removing operation is reduced. Thus, the maintenance can be completed more quickly.

Moreover, the method for removing the water of the fuel cell system of the second aspect is designed such that the method for removing the water of the fuel cell system of the first aspect further includes the step of opening all the water discharge valves to remove the water from all the blocks of the water circulation passage in at least one of a case where there is a possibility of freezing of the water circulation passage and a case where the fuel cell system is set to a resting state.

With this, in a case where there is a possibility of freezing of the water circulation passage, the possibility of freezing of the water in the water circulation passage can be reduced. When the user is away for a long period of time, and the fuel cell system is set to the resting state, the present mode is selected. With this, the water is removed from all the blocks of the water circulation passage. Therefore, it is possible to avoid a case where the water goes rotten and clogs in the water circulation passage since it is not used for a long period of time or a case where the water freezes in the water circulation passage since it is not used for a long period of time.

Moreover, the method for removing the water of the fuel cell system of the third aspect is designed such that in the method for removing the water of the fuel cell system of the first aspect, the water circulation passage includes a first water circulation passage through which cooling water for cooling the fuel cell circulates and a second water circulation passage through which the cooling water discharged from the first water circulation passage is purified and returns to the first water circulation passage; the separation mechanism is constituted by a cooling water tank to which the first water circulation passage and the second water circulation passage are connected and in which the cooling water is stored; the water discharge passages include a first water discharge passage provided at the first water circulation passage and a second water discharge passage provided at the second water circulation passage; the water discharge valves include a first water discharge valve provided on the first water discharge passage and a second water discharge valve provided on the second water discharge passage; and the fuel cell system further includes at least one of a first maintenance part provided on the first water circulation passage and a first abnormality detector provided on the first water circulation passage to detect an abnormality of the first water circulation passage and at least one of a second maintenance part provided on the second water circulation passage and a second abnormality detector provided on the second water circulation passage to detect an abnormality of the second water circulation passage, and the method includes the steps of: removing the water from only the first water circulation passage at least one of when maintenance of the first maintenance part is performed and when the abnormality of the first water circulation passage is detected; and removing the water from only the second water circulation passage at least one of when maintenance of the second maintenance part is performed and when the abnormality of the second water circulation passage is detected.

Further, the method for removing the water of the fuel cell system of the fourth aspect is designed such that in the method for removing the water of the fuel cell system of the first aspect, the water circulation passage includes a hot water tank configured to store the water having recovered exhaust heat of the fuel cell and a water passage through which water flows, the water being taken out from the hot water tank, recovering the exhaust heat of the fuel cell, and returning to the hot water tank; the separation mechanism includes a first on-off valve provided on a portion, through which the water having not yet recovered the exhaust heat of the fuel cell flows, of the water passage, and a second on-off valve provided on a portion, through which the water having recovered the exhaust heat of the fuel cell flows, of the water passage; the water discharge passages include a third water discharge passage provided at the water passage and a fourth water discharge passage provided at the hot water tank; the water discharge valves includes a third water discharge valve provided on the third water discharge passage and a fourth water discharge valve provided on the fourth water discharge passage; and the fuel cell system further includes a third abnormality detector provided on the water passage to detect an abnormality of the water passage and a fourth abnormality detector provided on the hot water tank to detect an abnormality of the hot water tank, and the method further includes the steps of: when the abnormality of the water passage is detected, closing the first on-off valve and the second on-off valve and opening the third water discharge valve to remove only the water in the water passage; and when the abnormality of the hot water tank is detected, closing the first on-off valve and the second on-off valve and opening the fourth water discharge valve to remove only the water in the hot water tank.

Hereinafter, embodiments of the present invention will be specifically exemplified in reference to the drawings. In the drawings, the same reference signs are used for the same or corresponding components, and a repetition of the same explanation is avoided. In the drawings, only the components necessary to explain the present invention are shown, and the other components are omitted. Further, the present invention is not limited to the embodiments below.

### Embodiment 1

In a fuel cell system according to Embodiment 1 of the present invention, a water circulation passage includes a first water circulation passage and a second water circulation passage.

### Configuration of Fuel Cell System

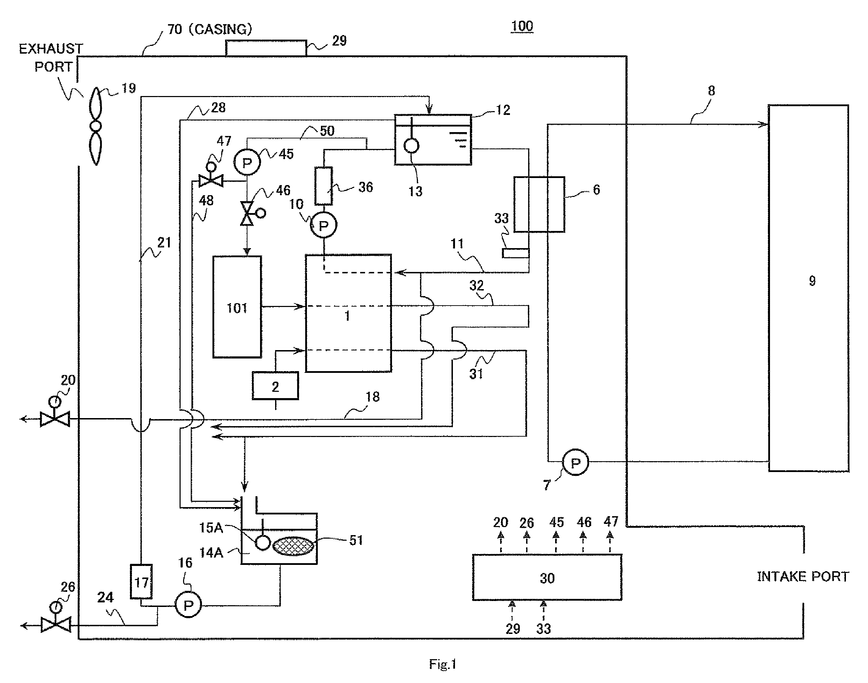

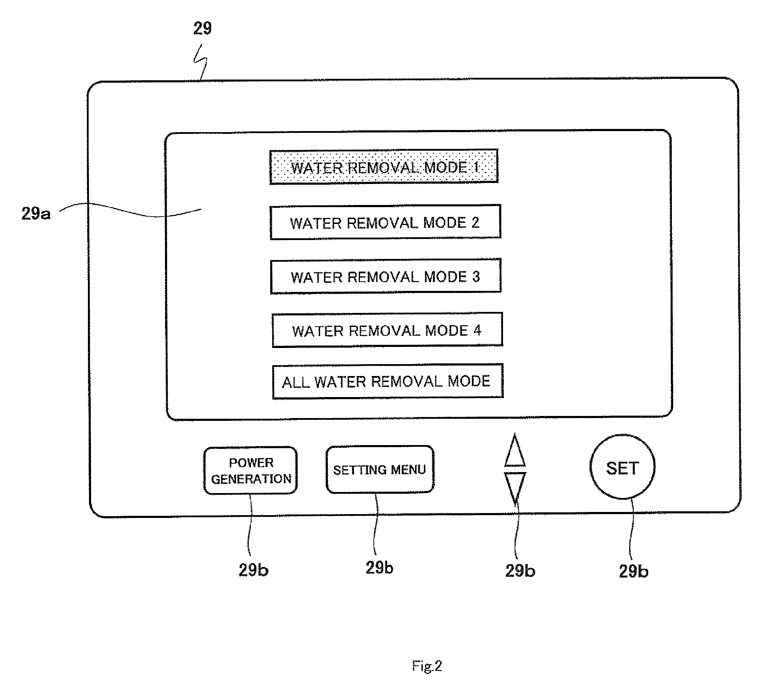

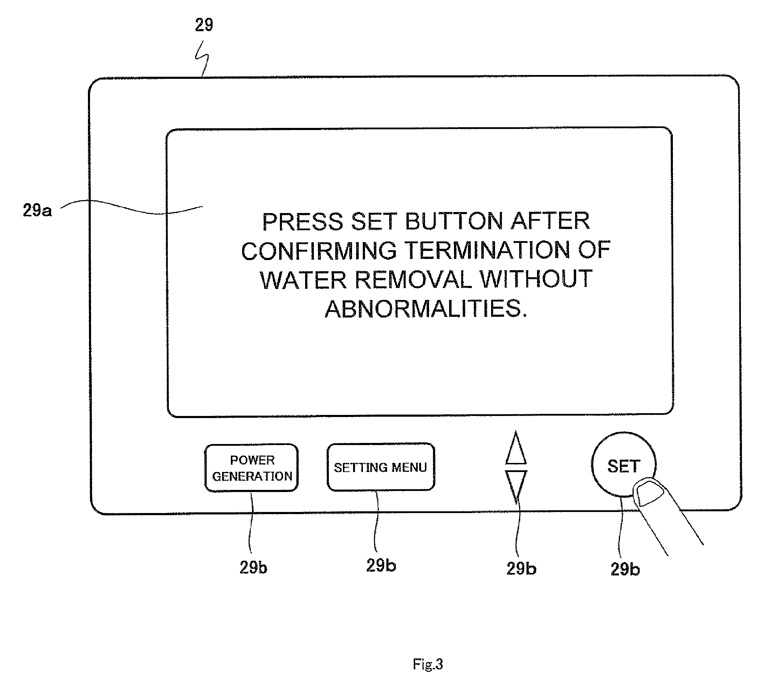

Fig. 1 is a block diagram schematically showing a schematic configuration of the fuel cell system according to Embodiment 1 of the present invention. Figs. 2 and 3 are schematic diagrams each showing a schematic configuration of an operating unit of the fuel cell system shown in Fig. 1.

As shown in Fig. 1, a fuel cell system 100 according to Embodiment 1 of the present invention includes a casing 70 and a hot water tank 9. The casing 70 includes an intake port and an exhaust port. Arranged in the casing 70 are: a fuel cell 1; an oxidizing gas supply unit 2 configured to supply an oxidizing gas (air); a hydrogen generator 101 configured to cause a reforming reaction between a raw material and water to generate a fuel gas; a heat exchanger 6; a cooling water tank 12; a first recovered water tank 14A; and a controller 30.

The fuel gas (hydrogen gas) generated by the hydrogen generator 101 is supplied to the fuel cell 1, and the oxidizing gas is supplied from the oxidizing gas supply unit 2 to the fuel cell 1. In the fuel cell 1, the supplied fuel gas and oxidizing gas electrochemically react with each other to generate electricity and heat. The fuel gas (off fuel gas) unconsumed in the fuel cell 1 flows through a fuel gas discharge passage 32 to the outside of the fuel cell system 100, and the oxidizing gas (off oxidizing gas) unconsumed in the fuel cell 1 flows through an oxidizing gas discharge passage 31 to the outside of the fuel cell system 100. Water generated from steam of the off oxidizing gas while the off oxidizing gas is flowing through the oxidizing gas discharge passage 31 is recovered by the first recovered water tank 14A.

Moreover, cooling water for recovering heat generated in the fuel cell 1 to cool the fuel cell 1 is supplied through a cooling water passage 11 to the fuel cell 1. The cooling water tank 12 is provided on the cooling water passage 11 and stores the cooling water. A second water pump 10, a first temperature detector 33, and a heater 36 are provided on the cooling water passage 11. The second water pump 10 is configured to cause the cooling water in the cooling water passage 11 to flow. A filter and a rotation detector configured to detect the number of rotations of the second water pump 10 are provided at the second water pump 10. The first temperature detector 33 is configured to detect the temperature of the cooling water in the cooling water passage 11 and transmit the detected temperature to the controller 30. The heater 36 is configured to heat the cooling water flowing through the cooling water passage 11. An electric heater may be used as the heater 36. It is preferable that the heater 36 be configured to consume surplus electricity of the fuel cell 1.

Moreover, the heat exchanger 6 is provided on the cooling water passage 11. The heat exchanger 6 is configured to perform heat exchange between the cooling water having exhaust heat recovered from the fuel cell 1 and water (hot water) taken out from the hot water tank 9 and flowing through an exhaust heat recovered water passage 8. The water (hot water) having recovered the heat of the cooling water in the heat exchanger 6 flows through the exhaust heat recovered water passage 8 to be supplied to the hot water tank 9. A third water pump 7 is provided on the exhaust heat recovered water passage 8. The third water pump 7 is configured to cause the water (hot water) in the exhaust heat recovered water passage 8 to flow. A filter and a rotation detector configured to detect the number of rotations of the third water pump 7 are provided at the third water pump 7.

Further, a first water discharge passage 18 is connected to the cooling water passage 11, and a downstream end of the first water discharge passage 18 is open to the outside of the fuel cell system 100 (casing 70). A first water discharge valve 20 is provided on a portion of the first water discharge passage 18, the portion being located outside the casing 70. The first water discharge valve 20 is configured such that by opening a valve body thereof, the water in the cooling water passage 11 and the cooling water tank 12 is discharged through the first water discharge passage 18 to the outside of the fuel cell system 100. The first water discharge valve 20 may be constituted by an automatic on-off valve whose open and close states are controlled by the controller 30 or may be constituted by a manual on-off valve which is opened and closed by a user or a maintenance worker.

A reforming water passage 50 through which the water is supplied to the hydrogen generator 101 is connected to the cooling water passage 11. A fourth water pump 45 configured to cause the water in the reforming water passage 50 to flow is provided on the reforming water passage 50. An upstream end of a branched passage 48 is connected to a portion of the reforming water passage 50, the portion being located downstream of the fourth water pump 45. A downstream end of the branched passage 48 is connected to the first recovered water tank 14A. A fourth on-off valve 47 is provided on the branched passage 48. Further, a third on-off valve 46 is provided on the reforming water passage 50 to be located downstream of a portion to which the branched passage 48 is connected. The third on-off valve 46 and the fourth on-off valve 47 constitute a switching unit. The controller 30 can control the open and close states of the third on-off valve 46 and the open and close states of the fourth on-off valve 47 to switch a destination to which the cooling water from the cooling water tank 12 flows, between the hydrogen generator 101 and the first recovered water tank 14A. In Embodiment 1, the third on-off valve 46 and the fourth on-off valve 47 constitute the switching unit. However, the present embodiment is not limited to this. For example, a three-way valve may be provided at a branch point where the branched passage 48 branches from the reforming water passage 50, and the controller 30 may control switching ports of the three-way valve to switch the destination to which the cooling water from the cooling water tank 12 flows, between the hydrogen generator 101 and the first recovered water tank 14A. A portion to which the reforming water passage 50 is connected is not limited to the present example. For example, the reforming water passage 50 may be connected to the water tank 12. To be specific, the reforming water passage 50 may be connected to any portion on the cooling water passage 11.

A water level detector 13 configured to detect a water level in the cooling water tank 12 is provided at the cooling water tank 12. The water level detector 13 may be any device as long as it can detect the water level in the cooling water tank 12 and output the detected water level to the controller 30. Examples of the water level detector 13 are a float type water level detector and a hydraulic type water level detector. Further, a second connection passage 28 through which the water having overflowed from the cooling water tank 12 returns to the first recovered water tank 14A is connected to the cooling water tank 12.

A water level detector 15A and a filter 51 are provided at the first recovered water tank 14A. The water level detector 15A may be any device as long as it can detect the water level in the first recovered water tank 14A and output the detected water level to the controller 30. Examples of the water level detector 15A are a float type water level detector and a hydraulic type water level detector. The filter 51 is configured to capture impurities in the first recovered water tank 14A.

An upstream end of a first connection passage 21 is connected to the first recovered water tank 14A, and a downstream end thereof is connected to the cooling water tank 12. A first water pump 16 and a purifier 17 are provided on portions of the first connection passage 21. The first water pump 16 is configured to cause the water in the first connection passage 21 to flow. A filter and a rotation detector configured to detect the number of rotations of the first water pump 16 are provided at the first water pump 16. The purifier 17 is configured to purify the water in the first recovered water tank 14A. For example, a container filled with ion-exchange resin is used as the purifier 17. The purifier 17 is not limited to the present example and may be any member, such as activated carbon, which purifies the recovered water supplied to the cooling water tank 12.

A first branched passage 24 branching from the first connection passage 21 is connected to a portion of the first connection passage 21. A downstream end of the first branched passage 24 is open to the outside of the fuel cell system 100 (casing 70). A second water discharge valve 26 is provided on a portion of the first branched passage 24, the portion being located downstream of the casing 70.

When the second water discharge valve 26 opens its valve body, the water in the purifier 17 and the first recovered water tank 14A flows through the first branched passage 24 to be discharged to the outside of the fuel cell system 100. Thus, the water is removed from the purifier 17 and the first recovered water tank 14A. After the completion of this water removal, water filling of the purifier 17 and the first recovered water tank 14A is executed. The purifier 17 and the first recovered water tank 14A are configured such that when the water level detector 15A detects the completion of the water filling of the first recovered water tank 14A, the water filling of the purifier 17 has already been completed. To be specific, an upper end of the purifier 17A is lower than the water level at the time of the completion of the water filling of the first recovered water tank 14A. In Embodiment 1, the first branched passage 24 serves as both a "second water discharge passage" and a "first branched passage", and the second water discharge valve 26 serves as both a "second water discharge valve" and a "fifth water discharge valve". This is because in Embodiment 1, since the first connection passage 21 is configured to be connected to a bottom surface of the first recovered water tank 14A, the water can be removed from both the purifier 17 and the first recovered water tank 14A only by providing the first branched passage 24 which is open to the outside of the fuel cell system 100 and the second water discharge valve 26 which opens and closes the first branched passage 24.

The above arrangement of the first recovered water tank 14A, the purifier 17, and the first branched passage 24 is just one example, and any arrangement may be adopted as long as the water in the purifier 17 and the first recovered water tank 14A is removed through the first branched passage 24, and the water filling of the purifier 17 is completed when the water level detector 15A detects the completion of the water filling of the first recovered water tank 14A after the completion of the water removal. The second water discharge valve 26 may be constituted by an automatic on-off valve whose open and close states are controlled by the controller 30 or may be constituted by a manual on-off valve which is opened and closed by a user or a maintenance worker. Further, the water filling of the purifier 17 and the first recovered water tank 14A may be performed by supplying the water (for example, tap water) from the outside of the fuel cell system 100 to the first recovered water tank 14A or by supplying the water from the hot water tank 9 to the first recovered water tank 14A.

Further, the first recovered water tank 14A is open to the atmosphere, and the cooling water tank 12 is open to the atmosphere through the second connection passage 28 and the first recovered water tank 14A.

An exhaust unit 19 configured to discharge gases (the air, the fuel gas, and the like) in the casing 70 to the outside is provided in the vicinity of the exhaust port of the casing 70. Examples of the exhaust unit 19 are fans, such as a blower and a sirocco fan.

The controller 30 may be any device as long as it controls respective devices, such as the second water pump 10, constituting the fuel cell system 100. For example, the controller 30 may be constituted by a microprocessor, a CPU, or the like. The controller 30 may be constituted by a single controller or may be constituted by a group of a plurality of controllers which cooperate to execute control operations of the fuel cell system 100. The controller 30 may include not only a calculation processing portion, such as a microprocessor or a CPU, but also a storage portion constituted by a memory, and a timer portion.

As shown in Figs. 2 and 3, an operating unit (command acquiring unit) 29 includes a control portion (not shown) constituted by a microprocessor, a communication portion (not shown), a display portion 29a, and an input portion 29b. The control portion controls the communication portion and the like. Herein, the operating unit 29 is constituted by a panel computer. In the operating unit 29, the communication portion receives a control signal, and the control portion processes the control signal and transmits the control signal to the display portion 29a. The input portion 29b of the operating unit 29 receives a set command of a block of the water circulation passage by a manual operation of an operator (the user or maintenance worker of the fuel cell system 100), the block being subjected to the water removing process. An operation signal input to the input portion 29b is transmitted through the control portion and communication portion of the operating unit 29 to the controller 30 and is received by the communication portion of the controller 30. In the following explanation, for ease of explanation, regarding the transmission and reception of signals between the controller 30 and the operating unit 29, the communication between respective communication portions of the controller 30 and the operating unit 29 and the process of the control portion of the operating unit 29 are omitted.

Moreover, in Embodiment 1, examples of a "first maintenance part" are a filter (not shown) provided in the second water pump 10 and a filter (not shown) provided at an exit, through which the cooling water is supplied to the cooling water passage 11, of the cooling water tank 12 to capture impurities in the cooling water tank 12. Examples of a "second maintenance part" are the purifier 17 and the filter 51. Examples of a "first abnormality detector" are the water level detector 13, the first temperature detector 33, and the rotation detector (not shown) configured to detect the number of rotations of the second water pump 10. Examples of a "second abnormality detector" are a temperature detector (not shown) configured to detect the temperature of the recovered water, the water level detector 15A, and the rotation detector (not shown) configured to detect the number of rotations of the first water pump 16.

Further, in Embodiment 1, the "first water circulation passage" is constituted by the cooling water passage 11 and the cooling water tank 12, and the "second water circulation passage" is constituted by the cooling water tank 12, the first connection passage 21, the second connection passage 28, and the first recovered water tank 14A. The cooling water tank 12 serves as a separation mechanism.

### Operations of Fuel Cell System

Next, the operations of the fuel cell system 100 according to Embodiment 1 will be explained. Herein, the water removing operation of the fuel cell system 100 will be explained. Since the electric power generating operation of the fuel cell system 100 according to Embodiment 1 is the same as the electric power generating operation of a common fuel cell system 100, an explanation thereof is omitted.

### Water Removing Process of First Water Circulation Passage

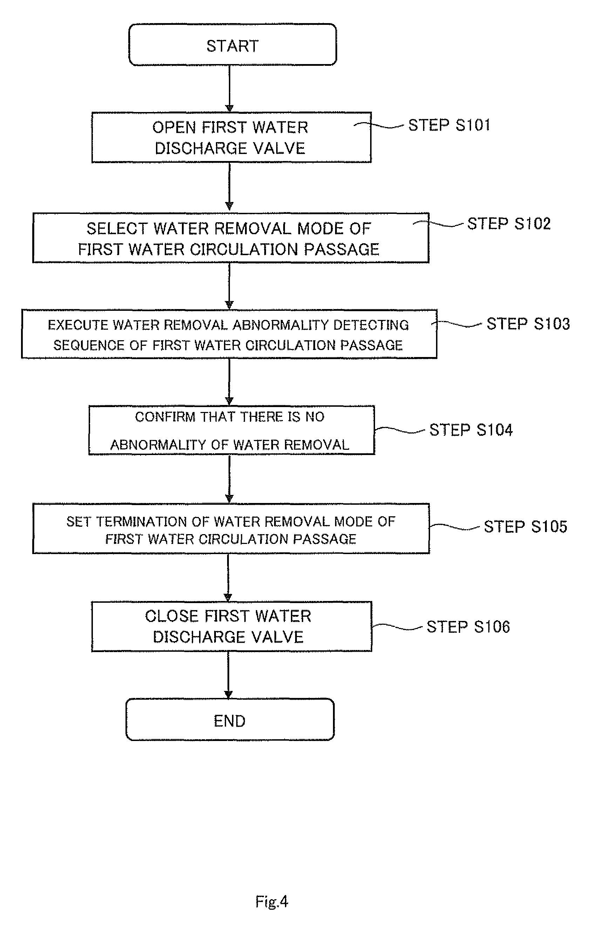

Fig. 4 is a flow chart schematically showing the water removing process of the first water circulation passage of the fuel cell system 100 shown in Fig. 1.

First, for example, during the electric power generating operation or operation stop of the fuel cell system 100, if the controller 30 detects that the abnormality (failure) of the first temperature detector 33 that is the first abnormality detector has occurred or if the controller 30 detects that the time for replacement of the filter (not shown) that is the first maintenance part and is provided at the cooling water tank 12 has come, the controller 30 informs the display portion 29a of the operating unit 29 by using an error code that the failure of the first temperature detector 33 has occurred or the time for replacement of the filter has come, and also informs a maintenance company that the failure has occurred or the time for replacement of the filter has come. Next, in a case where the fuel cell system 100 is performing the electric power generating operation, the controller 30 performs abnormality stop of the electric power generating operation of the fuel cell system 100.

Then, the maintenance worker of the maintenance company which has received the information of the failure performs the below-described water removing process of the first water circulation passage.

As shown in Fig. 4, the maintenance worker manually opens the first water discharge valve 20 (Step S101) and selects a water removal mode of the first water circulation passage (Step S102). Specifically, the maintenance worker operates the input portion 29b of the operating unit 29 to select a water removal mode 1 shown in Fig. 2 and press a set button. When the water removal mode 1 is selected, the controller 30 keeps the stop states of the first water pump 16, the second water pump 10, and the fourth water pump 45 and keeps the close states of the third on-off valve 46 and the fourth on-off valve 47. With this, the cooling water tank 12 serves as the separation mechanism, separates a block of the first water circulation passage and a block of the second water circulation passage from each other, and divides the water between these blocks. The water in the first water circulation passage including the cooling water passage 11 and the cooling water tank 12 is discharged through the first water discharge passage 18 to the outside of the fuel cell system 100. Thus, the water is removed from the first water circulation passage.

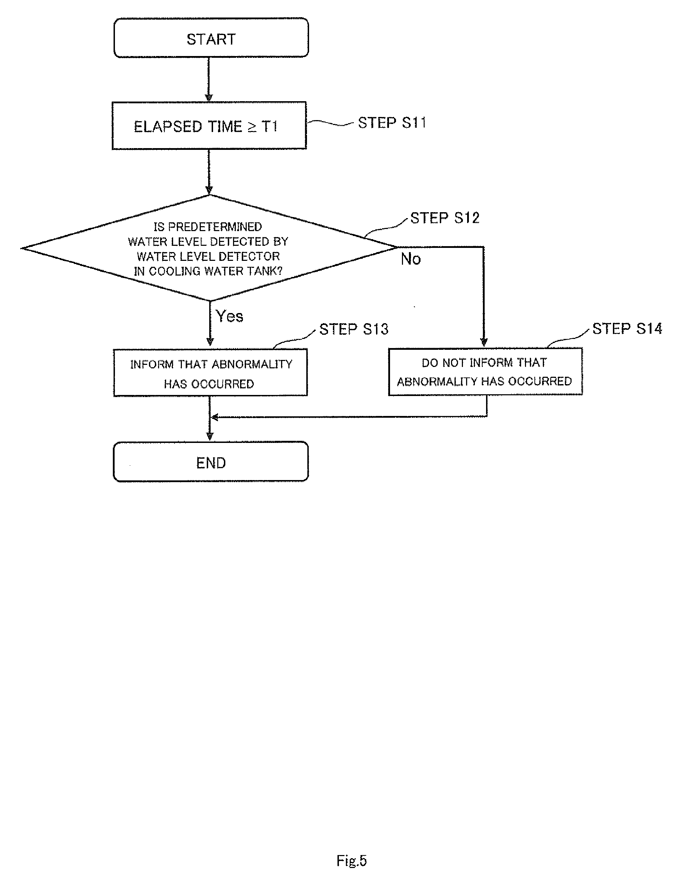

When the water removal mode 1 is selected in Step S102, the controller 30 executes a water removal abnormality detecting sequence of the first water circulation passage (Step S103). Here, the water removal abnormality detecting sequence of the first water circulation passage will be explained in reference to Fig. 5.

Fig. 5 is a flow chart schematically showing the water removal abnormality detecting sequence of the first water circulation passage in the water removing process of the fuel cell system 100 shown in Fig. 4.

As shown in Fig. 5, when an elapsed time since the selection of the water removal mode 1 in Step S102 becomes equal to or longer than T1 (Step S 11), the controller 30 determines by the water level detector 13 in the cooling water tank 12 whether or not the water is remaining in the cooling water tank 12 (Step S12). Here, T1 is a time equal to or longer than a time necessary to discharge the cooling water remaining in the cooling water passage 11 and the cooling water tank 12 to the outside of the fuel cell system 100 and is determined in advance by experiments or the like. In the present embodiment, whether or not the water is remaining in the cooling water tank 12 is determined based on whether or not the water level equal to or higher than a lower detection limit of the water level detector 13 is detected by the water level detector 13. Specifically, when the water level equal to or higher than the lower detection limit of the water level detector 13 is detected, it is determined that the water is remaining in the cooling water tank 12. When the water level equal to or higher than the lower detection limit of the water level detector 13 is not detected, it is determined that the water is not remaining in the cooling water tank 12.

When the water level detector 13 detects that the water is remaining in the cooling water tank 12 (Yes in Step S12), the controller 30 causes the display portion 29a of the operating unit 29 to inform that the abnormality has occurred (Step S13) and terminates the present sequence. In contrast, when the water level detector 13 does not detect that the water is remaining in the cooling water tank 12 (No in Step S12), the controller 30 does not cause the display portion 29a to inform that the abnormality has occurred (Step S 14) and terminates the present sequence.

Next, when the controller 30 confirms that there is no abnormality of the water removal of the first water circulation passage in the water removal abnormality detecting sequence (Step S104) and confirms that the water removal is terminated, the controller 30 causes the input portion 29b of the operating unit 29 to inform that the water removal mode of the first water circulation passage has been terminated (see Fig. 3). Thus, the maintenance worker presses the set button of the input portion 29b to set the termination of the water removal mode (Step S105).

Next, the maintenance worker manually closes the first water discharge valve 20 (Step S106) and replaces the first temperature detector 33 or the filter. After the replacement of the first temperature detector 33 or the filter, the water filling of the first water circulation passage is executed.

### Water Removing Process of Second Water Circulation Passage

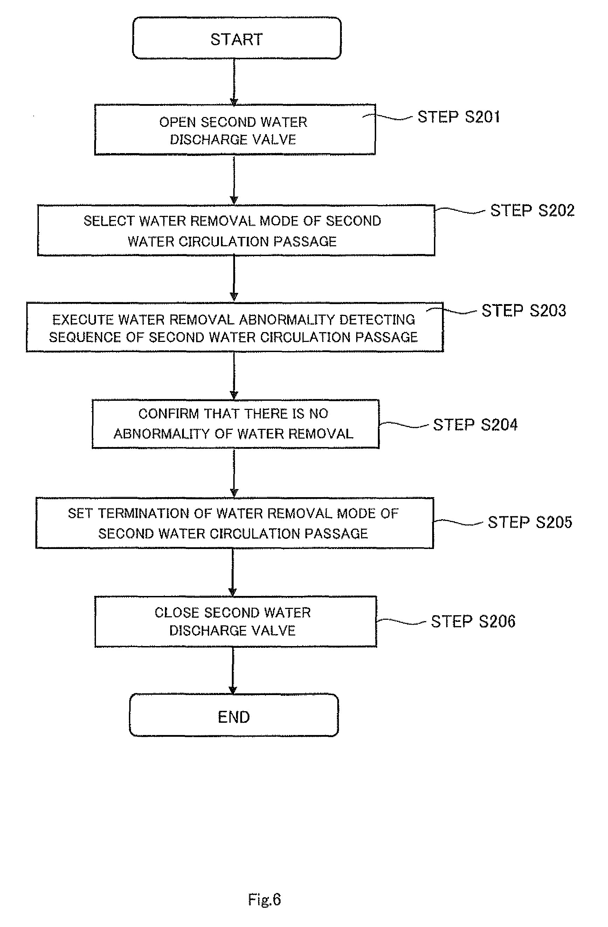

Fig. 6 is a flow chart schematically showing the water removing process of the second water circulation passage of the fuel cell system 100 shown in Fig. 1.

First, as with the water removing process of the first water circulation passage in the fuel cell system 100 according to Embodiment 1, for example, during the electric power generating operation or operation stop of the fuel cell system 100, if the controller 30 detects that the abnormality (failure) of a temperature detector (not shown) that is a second abnormality detector and is configured to detect the temperature of the recovered water has occurred or if the controller 30 detects that the time for replacement of the filter 51 that is the second maintenance part and is provided at the first recovered water tank 14A has come, the controller 30 informs the display portion 29a of the operating unit 29 by using an error code that the failure of the temperature detector has occurred or the time for replacement of the filter 51 has come, and also informs the maintenance company that the failure has occurred or the time for replacement of the filter has come. Next, in a case where the fuel cell system 100 is performing the electric power generating operation, the controller 30 performs the abnormality stop of the electric power generating operation of the fuel cell system 100.

Then, the maintenance worker of the maintenance company which has received the information of the failure performs the below-described water removing process of the second water circulation passage.

As shown in Fig. 6, the maintenance worker manually opens the second water discharge valve 26 (Step S201) and selects the water removal mode of the second water circulation passage (Step S202). Specifically, the maintenance worker operates the input portion 29b of the operating unit 29 to select a water removal mode 2 shown in Fig. 2 and press the set button. When the water removal mode 2 is selected, the controller 30 keeps the stop states of the first water pump 16, the second water pump 10, and the fourth water pump 45 and keeps the close states of the third on-off valve 46 and the fourth on-off valve 47. With this, the cooling water tank 12 serves as the separation mechanism, separates the block of the second water circulation passage and the block of the first water circulation passage from each other, and divides the water between these blocks. The water in the second water circulation passage including the first connection passage 21, the second connection passage 28, and the first recovered water tank 14A is discharged through the first branched passage 24 to the outside of the fuel cell system 100. Thus, the water is removed from the second water circulation passage. At this time, the water in the purifier 17 is also removed.

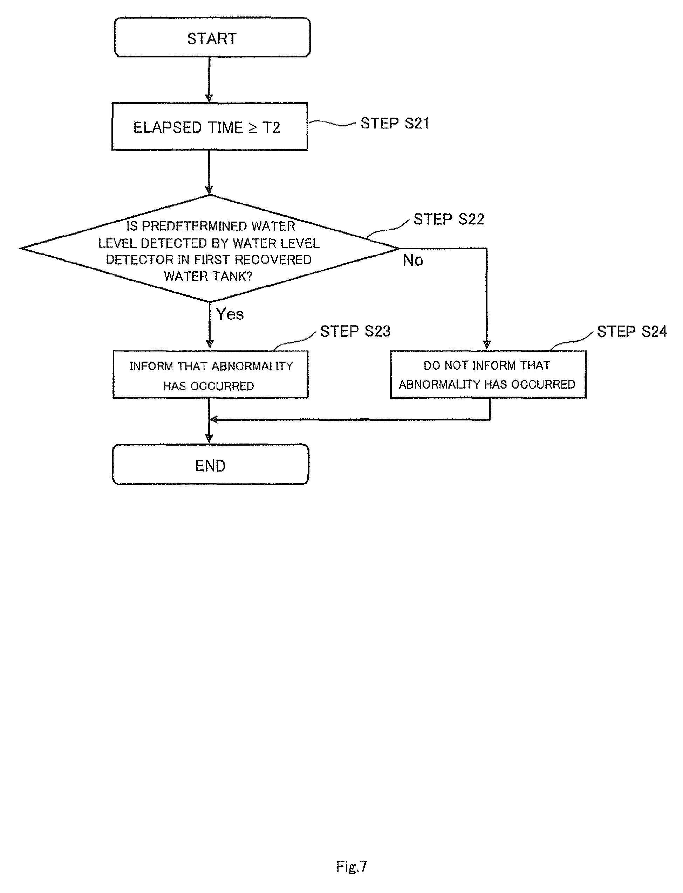

When the water removal mode of the second water circulation passage is selected in Step S202, the controller 30 executes a water removal abnormality detecting sequence of the second water circulation passage (Step S203). Here, the water removal abnormality detecting sequence of the second water circulation passage will be explained in reference to Fig. 7.

Fig. 7 is a flow chart schematically showing the water removal abnormality detecting sequence of the second water circulation passage in the water removing process of the fuel cell system 100 shown in Fig. 6.

As shown in Fig. 7, when an elapsed time since the selection of the water removal mode 2 in Step S202 becomes equal to or longer than T2 (Step S21), the controller 30 determines by the water level detector 15A in the first recovered water tank 14A whether or not the water is remaining in the first recovered water tank 14A (Step S22). Here, T2 is a time equal to or longer than a time necessary to discharge the recovered water remaining in the second water circulation passage to the outside of the fuel cell system 100 and is determined in advance by experiments or the like. In the present embodiment, whether or not the water is remaining in the first recovered water tank 14A is determined based on whether or not the water level equal to or higher than a lower detection limit of the water level detector 15A is detected by the water level detector 15A. Specifically, when the water level equal to or higher than the lower detection limit of the water level detector 15A is detected, it is determined that the water is remaining in the first recovered water tank 14A. When the water level equal to or higher than the lower detection limit of the water level detector 15 is not detected, it is determined that the water is not remaining in the first recovered water tank 14A.

When the water level detector 15A detects that the water is remaining in the first recovered water tank 14A (Yes in Step S22), the controller 30 causes the display portion 29a of the operating unit 29 to inform that the abnormality has occurred (Step S23) and terminates the present sequence. In contrast, when the water level detector 15A detects that the water remains in the first recovered water tank 14A, the controller 30 does not cause the display portion 29a to inform that the abnormality has occurred (Step S24) and terminates the present sequence.

Next, when the controller 30 confirms that there is no abnormality of the water removal of the second water circulation passage in the water removal abnormality detecting sequence (Step S204) and confirms that the water removal is terminated, the controller 30 causes the input portion 29b of the operating unit 29 to inform that the water removal mode of the second water circulation passage has been terminated (see Fig. 3). Thus, the maintenance worker presses the set button of the input portion 29b to set the termination of the water removal mode (Step S205).

Next, the maintenance worker manually closes the second water discharge valve 26 (Step S206) and replaces the temperature detector or the filter 51. After the replacement of the temperature detector or the filter, the water filling of the second water circulation passage is executed. At this time, as described above, by detecting the water level by the water level detector 15A, the controller 30 can detect the completion of the water filling of the purifier 17.

As above, in accordance with the fuel cell system 100 of Embodiment 1, the water is removed from only the block (the first water circulation passage or the second water circulation passage), from which the water needs to be removed, of the water circulation passage. With this, the water removing operation can be performed more quickly than a case where all the water in the water circulation passage is removed. In addition, the amount of time for the water filling operation performed after the water removing operation is reduced. Thus, the maintenance is completed more quickly.

### Water Removing Process of All Blocks of Water Circulation Passage

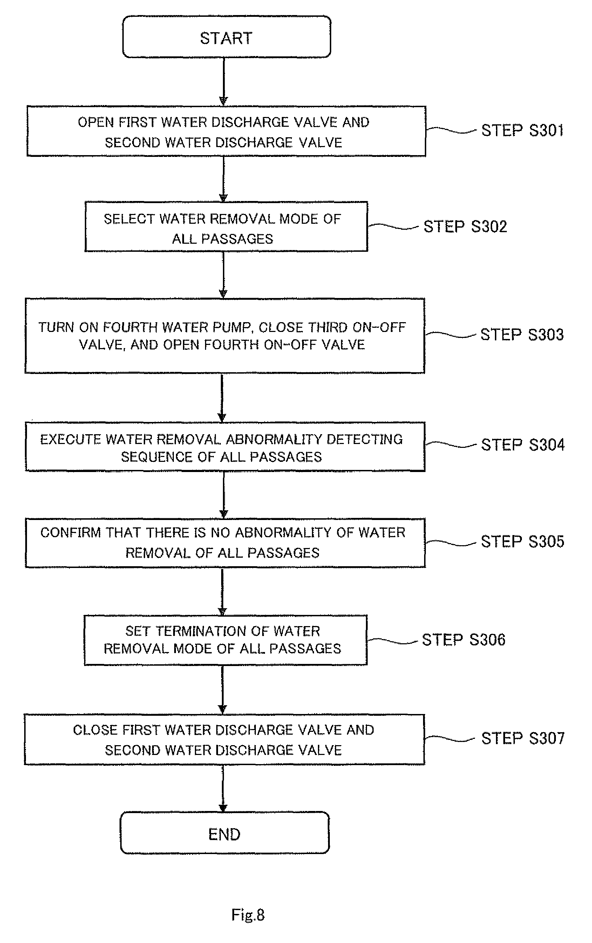

Fig. 8 is a flow chart schematically showing the water removing process of all the blocks of the water circulation passage of the fuel cell system 100 shown in Fig. 1.

First, for example, the below-described water removing process of all the blocks of the water circulation passage is executed in a case where the user is aware of the possibility of freezing of the water in the water circulation passage in advance based on information, such as weather forecast or in a case where there is a possibility of the rottenness or freezing of the water in the water circulation passage since the user is away for a long period of time and the fuel cell system 100 is not used for a long period of time.

As shown in Fig. 8, the user manually opens the first water discharge valve 20 and the second water discharge valve 26 (Step S301) and selects the water removal mode of all the blocks of the water circulation passage (Step S302). Specifically, the user operates the input portion 29b of the operating unit 29 to select an all water removal mode shown in Fig. 2 and press the set button. When the all water removal mode is selected, the controller 30 keeps the stop states of the first water pump 16 and the second water pump 10, keeps the close state of the third on-off valve 46, opens the fourth on-off valve 47, and activates the fourth water pump 45 (Step S303). With this, the water in the first water circulation passage and the second water circulation passage is discharged to the outside of the fuel cell system 100. Thus, the water is removed from all the blocks of the water circulation passage, and the water in the reforming water passage 50 and the branched passage 48 is also removed. Specifically, the water in the first water circulation passage including the cooling water passage 11 and the cooling water tank 12 is discharged through the first water discharge passage 18 to the outside of the fuel cell system 100. Thus, the water is removed from the first water circulation passage. In addition, the controller 30 activates the fourth water pump 45, keeps the close state of the third on-off valve 46, and opens the fourth on-off valve 47. With this, the water is supplied from the reforming water passage 50 through the branched passage 48 to the first recovered water tank 14A. Then, the cooling water supplied to the first recovered water tank 14A is discharged through the first branched passage 24 to the outside of the fuel cell system 100. To be specific, by the operations in Step S303, the water is removed from the reforming water passage 50 and the branched passage 48. Further, the water in the second water circulation passage including the first connection passage 21, the second connection passage 28, and the first recovered water tank 14A is discharged through the first branched passage 24 to the outside of the fuel cell system 100. Thus, the water is removed from the second water circulation passage. At this time, the water in the purifier 17 is also removed.

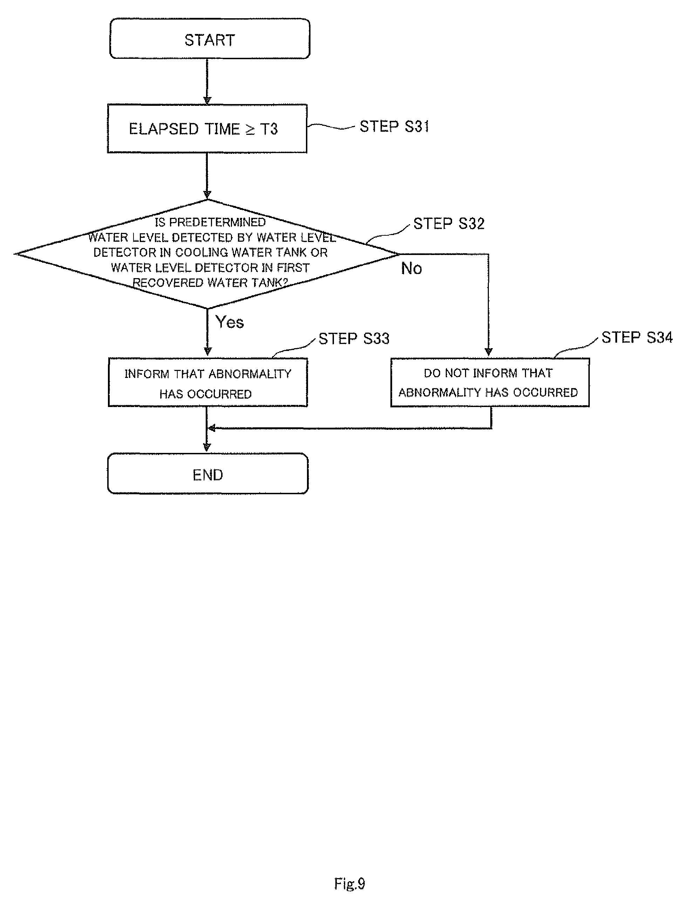

When the all water removal mode is selected in Step S302, the controller 30 executes a water removal abnormality detecting sequence of all the blocks of the water circulation passage (Step S304). Here, the water removal abnormality detecting sequence of all the blocks of the water circulation passage will be explained in reference to Fig. 9.

Fig. 9 is a flow chart schematically showing the water removal abnormality detecting sequence of all the blocks of the water circulation passage in the water removing process of the fuel cell system 100 shown in Fig. 8.

As shown in Fig. 9, when an elapsed time since the selection of the all water removal mode in Step S302 becomes equal to or longer than T3 (Step S31), the controller 30 determines by the water level detector 13 whether or not the water is remaining in the cooling water tank 12 and determines by the water level detector 15A whether or not the water is remaining in the first recovered water tank 14A (Step S32). Here, T3 is a time equal to or longer than a time necessary to discharge the water remaining in all the blocks of the water circulation passage to the outside of the fuel cell system 100 and is determined in advance by experiments or the like. A method for determining by the water level detector 13 whether or not the water is remaining in the cooling water tank 12 and a method for determining by the water level detector 15A whether or not the water is remaining in the first recovered water tank 14A are the same as those of the above-described water removing process of the first water circulation passage and the above-described water removing process of the second water circulation passage, so that explanations thereof are omitted.

Then, when the water level detector 13 detects that the water is remaining in the cooling water tank 12 or the water level detector 15A detects that the water is remaining in the first recovered water tank 14A (Yes in Step S32), the controller 30 causes the display portion 29a of the operating unit 29 to inform that the abnormality has occurred (Step S33) and terminates the present sequence. In contrast, when the water level detector 13 detects that the water is not remaining in the cooling water tank 13 or the water level detector 15A detects that the water is not remaining in the first recovered water tank, the controller 30 does not cause the display portion 29a to inform that the abnormality has occurred (Step S34) and terminates the present sequence.

Next, when the controller 30 confirms that there is no abnormality in all the blocks of the water circulation passage in the water removal abnormality detecting sequence (Step S305) and confirms that the water removal is terminated, the controller 30 causes the input portion 29b of the operating unit 29 to inform that the water removal mode of all the blocks of the water circulation passage has been terminated (see Fig. 3). Thus, the maintenance worker presses the set button of the input portion 29b to set the termination of the water removal mode (Step S306). With this, the controller 30 stops the fourth water pump 45 and closes the fourth on-off valve 47.

Next, the maintenance worker manually closes the first water discharge valve 20 and the second water discharge valve 26 (Step S307).

As above, by performing the all water removing process, the freezing and rottenness of the water in all the blocks of the water circulation passage can be avoided in advance.

Embodiment 1 adopts a mode in which the heat exchanger 6 configured to recover the heat of the cooling water by the hot water is provided to recover the exhaust heat from the fuel cell 1. However, the present embodiment is not limited to this and may adopt a mode in which a first circulation passage through which cooling water circulates is provided, the cooling water recovering the heat of the unconsumed reactant gas flowing through the fuel gas discharge passage 32 or the oxidizing gas discharge passage 31, and the first water circulation passage and the second water circulation passage are separated from each other by the cooling water tank.

Moreover, Embodiment 1 adopts a mode in which the water generated from the steam of the unconsumed oxidizing gas is recovered by the first recovered water tank 14A. However, the present embodiment is not limited to this and may adopt a mode in which the water generated from the steam of the unconsumed fuel gas is recovered by the first recovered water tank 14A or a mode in which the water generated from the steam of both the unconsumed oxidizing gas and the unconsumed fuel gas is recovered by the first recovered water tank 14A.

Further, Embodiment 1 adopts a mode in which in the water removing process, the maintenance worker manually opens and closes the first water discharge valve 20 and the second water discharge valve 26. However, the present embodiment is not limited to this and may adopt a mode in which in the water removing process, the controller 30 opens and closes at least one of the first water discharge valve 20 and the second water discharge valve 26. In this case, after a predetermined water removal mode is selected by the maintenance worker (Step S102, S202, or S302), the controller 30 executes the operation (Step S101, S201, or S301) of opening at least one of the first water discharge valve 20 and the second water discharge valve 26.

### Embodiment 2

In the fuel cell system according to Embodiment 2 of the present invention, the water circulation passage is constituted by a hot water tank and a water passage.

### Configuration of Fuel Cell System

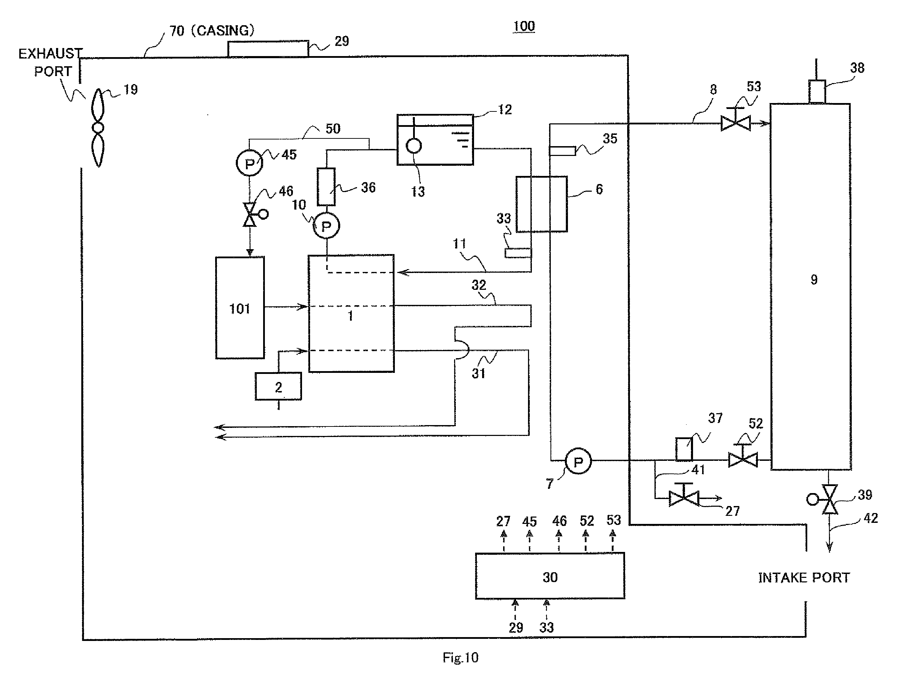

Fig. 10 is a block diagram schematically showing a schematic configuration of the fuel cell system according to Embodiment 2 of the present invention.

As shown in Fig. 10, the fuel cell system 100 according to Embodiment 2 of the present invention is the same in basic configuration as the fuel cell system 100 according to Embodiment 1 of the present invention but is different from the fuel cell system 100 according to Embodiment 1 of the present invention in that the exhaust heat recovered water passage (water passage) 8 and the hot water tank 9 constitute the water circulation passage.

Specifically, a second temperature detector 35 configured to detect the temperature of the water in the exhaust heat recovered water passage 8 is provided on the exhaust heat recovered water passage 8. In addition, a first on-off valve 52 is provided on a portion, through which the water having not yet recovered the exhaust heat of the fuel cell 1 flows, of the exhaust heat recovered water passage 8, and a second on-off valve 53 is provided on a portion, through which the water having recovered the exhaust heat of the fuel cell 1 flows, of the exhaust heat recovered water passage 8. To be specific, the first on-off valve 52 is provided on the exhaust heat recovered water passage 8 to be located upstream of the heat exchanger 6 configured to recover the exhaust heat of the fuel cell 1, and the second on-off valve 53 is provided on the exhaust heat recovered water passage 8 to be located downstream of the heat exchanger 6. Then, the first on-off valve 52 and the second on-off valve 53 serve as the separation mechanism configured to separate the block including the hot water tank 9 (to be precise, the block including the hot water tank 9, a portion, located upstream of the first on-off valve 52, of the exhaust heat recovered water passage 8, and a portion, located downstream of the second on-off valve 53, of the exhaust heat recovered water passage 8) and the block including the exhaust heat recovered water passage 8 (to be precise, the block including a portion of the exhaust heat recovered water passage 8, the portion being located downstream of the first on-off valve 52 and upstream of the second on-off valve 53) from each other by closing valve bodies of the first on-off valve 52 and the second on-off valve 53 and to divide the water between these blocks.

Moreover, a third water discharge passage 41 is connected to a portion of the exhaust heat recovered water passage 8, the portion being located between the first on-off valve 52 and the second on-off valve 53. A third water discharge valve 27 is provided on the third water discharge passage 41. The first on-off valve 52 and the second on-off valve 53 are configured to allow the water to flow through the exhaust heat recovered water passage 8 and block the water in the exhaust heat recovered water passage 8. The third water discharge valve 27 is configured such that by opening a valve body of the third water discharge valve 27, the water in the exhaust heat recovered water passage 8 is discharged through the third water discharge passage 41 to the outside of the fuel cell system 100. Each of the first on-off valve 52, the second on-off valve 53, and the third water discharge valve 27 may be constituted by an automatic on-off valve whose open and close states are controlled by the controller 30 or may be constituted by a manual on-off valve which is opened and closed by a user or a maintenance worker.

A gas venting unit 37 is provided on the exhaust heat recovered water passage 8 to be located between the first on-off valve 52 and the second on-off valve 53. The gas venting unit 37 is configured to allow the exhaust heat recovered water passage 8 to communicate with the atmosphere by activating the gas venting unit 37. For example, the gas venting unit 37 may be constituted by a gas venting pipe connected to a pipe constituting the exhaust heat recovered water passage 8, and an on-off valve provided on this gas venting pipe. This on-off valve may be constituted by an automatic on-off valve whose open and close states are controlled by the controller 30 or may be constituted by a manual on-off valve which is opened and closed by a user or a maintenance worker.

A gas venting unit 38 configured to allow the hot water tank 9 to communicate with the atmosphere is provided on an upper portion (herein, an upper end) of the hot water tank 9, and a fourth water discharge passage 42 is connected to a lower portion (herein, a lower end) of the hot water tank 9. A fourth water discharge valve 39 is provided on the fourth water discharge passage 42. The fourth water discharge valve 39 is configured such that by opening a valve body of the fourth water discharge valve 39, the water in the hot water tank 9 is discharged through the fourth water discharge passage 42 to the outside of the fuel cell system 100. The fourth water discharge valve 39 may be constituted by an automatic on-off valve whose open and close states are controlled by the controller 30 or may be constituted by a manual on-off valve which is opened and closed by a user or a maintenance worker.

In Embodiment 2, examples of a "third abnormality detector" are the second temperature detector 35 configured to detect the temperature of the water flowing through the exhaust heat recovered water passage 8 and the rotation detector (not shown) configured to detect the number of rotations of the third water pump 7. Examples of a "fourth abnormality detector" are a temperature detector (not shown) configured to detect the temperature of the water in the hot water tank 9 and a water level detector (not shown) configured to detect the water level in the hot water tank 9.

The fuel cell system 100 of Embodiment 2 is configured such that the water flowing through the exhaust heat recovered water passage 8 recovers heat from the cooling water, which cools the fuel cell 1, by the heat exchanger 6. Instead of this, a heat exchanger configured to perform heat exchange between the fuel gas discharge passage 32 and the exhaust heat recovered water passage 8 may be provided, a heat exchanger configured to perform heat exchange between the oxidizing gas discharge passage 31 and the exhaust heat recovered water passage 8 may be provided, or a heat exchanger configured to perform heat exchange between a flue gas passage (not shown), through which a flue gas having heated the hydrogen generator 101 flows, and the exhaust heat recovered water passage 8 may be provided. To be specific, the heat exchanger may be any device as long as it recovers the exhaust heat of the fuel cell system 100 by using the water in the exhaust heat recovered water passage 8.

### Operations of Fuel Cell System

Next, the water removing operation of the fuel cell system 100 according to Embodiment 2 will be explained.

### Water Removing Process of Water Passage

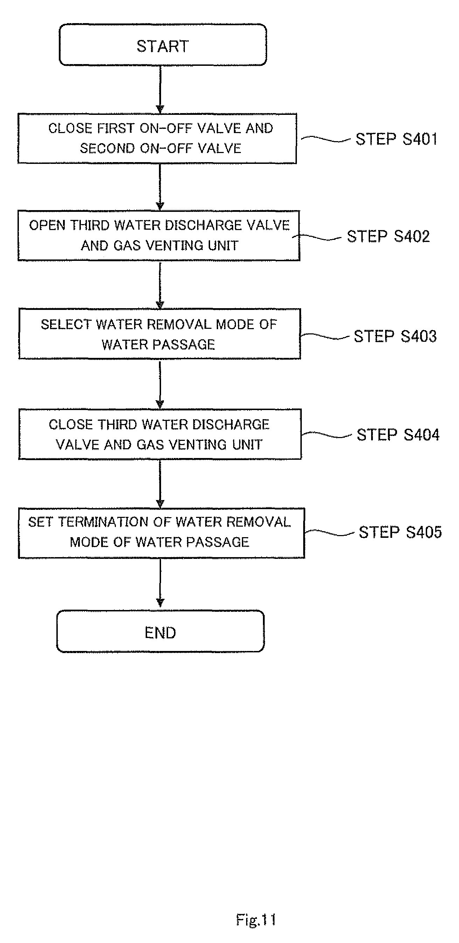

Fig. 11 is a flow chart schematically showing the water removing process of the exhaust heat recovered water passage (water passage) 8 of the fuel cell system 100 shown in Fig. 10.

First, for example, during the electric power generating operation or operation stop of the fuel cell system 100, if the controller 30 detects that the abnormality (failure) of the second temperature detector 35 that is the third abnormality detector has occurred, the controller 30 informs the display portion 29a of the operating unit 29 that the failure of the second temperature detector 35 has occurred and also informs the maintenance company that the failure has occurred. Next, in a case where the fuel cell system 100 is performing the electric power generating operation, the controller 30 performs the abnormality stop of the electric power generating operation of the fuel cell system 100.

Then, the maintenance worker of the maintenance company which has received the information of the failure performs the below-described water removing process of the exhaust heat recovered water passage (water passage) 8.

As shown in Fig. 11, the maintenance worker manually closes the first on-off valve 52 and the second on-off valve 53 (Step S401) and manually opens the third water discharge valve 27 and the gas venting unit 37 (Step S402). With this, the first on-off valve 52 and the second on-off valve 53 serve as the separation mechanism, separates the block including the exhaust heat recovered water passage 8 (to be precise, the block including a portion of the exhaust heat recovered water passage 8, the portion being located downstream of the first on-off valve 52 and upstream of the second on-off valve 53) and the block including the hot water tank 9 (to be precise, the block including the hot water tank 9, a portion, located upstream of the first on-off valve 52, of the exhaust heat recovered water passage 8, and a portion, located downstream of the second on-off valve 53, of the exhaust heat recovered water passage 8) from each other, and divides the water between these blocks.

After that, the maintenance worker selects the water removal mode of the above water passage (Step S403). Specifically, the maintenance worker operates the input portion 29b of the operating unit 29 to select a water removal mode 3 shown in Fig. 2 and press the set button. When the water removal mode 3 is selected, the controller 30 starts measuring a processing time of the water removing process.

By the above operation, the water in the exhaust heat recovered water passage 8 is discharged through the third water discharge passage 41 to the outside of the fuel cell system 100. Thus, the water is removed from the exhaust heat recovered water passage 8. Then, when the measured processing time has passed a time at which the water removing process may be completed, the controller 30 causes the input portion 29b of the operating unit 29 to inform that the water removal mode of the exhaust heat recovered water passage 8 has been terminated (see Fig. 3). When an image showing that the water removal mode has been terminated is displayed on the display portion 29a of the operating unit 29, the maintenance worker visually confirms that the water removing process through the third water discharge passage 41 has been completed and manually closes the third water discharge valve 27 and the gas venting unit 37 (Step S404). Then, the maintenance worker presses the set button of the input portion 29b to set the termination of the water removal mode (Step S405). The termination of the water removal of the exhaust heat recovered water passage 8 is determined based on whether or not a time it takes to remove the water from the exhaust heat recovered water passage 8 has elapsed, the time being obtained in advance by experiments or the like.

Next, the maintenance worker replaces the second temperature detector 35. When the replacement of the second temperature detector 35 is terminated, the water filling in the exhaust heat recovered water passage (water passage) 8 is performed.

### Water Removal of Hot Water Tank

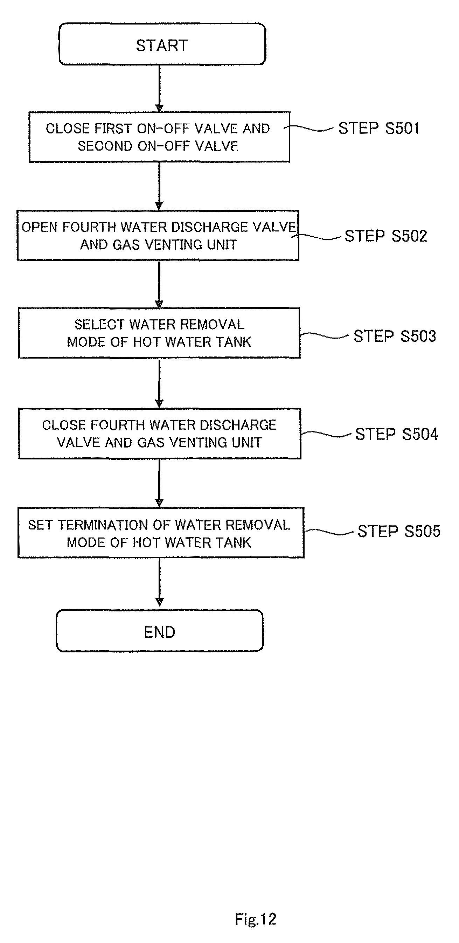

Fig. 12 is a flow chart schematically showing the water removing process of the hot water tank 9 of the fuel cell system 100 shown in Fig. 10.

First, for example, during the electric power generating operation or operation stop of the fuel cell system 100, if the controller 30 detects that the abnormality (failure) of the temperature detector (not shown) that is the fourth abnormality detector and provided at the hot water tank 9 has occurred, the controller 30 infonns the display portion 29a of the operating unit 29 that the failure of the temperature detector has occurred and also informs the maintenance company that the failure has occurred. Next, in a case where the fuel cell system 100 is performing the electric power generating operation, the controller 30 performs the abnormality stop of the electric power generating operation of the fuel cell system 100.

Then, the maintenance worker of the maintenance company which has received the information of the failure performs the below-described water removing process of the hot water tank 9.

As shown in Fig. 12, the maintenance worker manually closes the first on-off valve 52 and the second on-off valve 53 (Step S501) and manually opens the fourth water discharge valve 39 and the gas venting unit 38 (Step S502). With this, the first on-off valve 52 and the second on-off valve 53 serve as the separation mechanism, separates the block including the exhaust heat recovered water passage 8 (to be precise, the block including a portion of the exhaust heat recovered water passage 8, the portion being located downstream of the first on-off valve 52 and upstream of the second on-off valve 53) and the block including the hot water tank 9 (to be precise, the block including the hot water tank 9, a portion, located upstream of the first on-off valve 52, of the exhaust heat recovered water passage 8, and a portion, located downstream of the second on-off valve 53, of the exhaust heat recovered water passage 8) from each other, and divides the water between these blocks.

After that, the maintenance worker selects the water removal mode of the hot water tank 9 (Step S503). Specifically, the maintenance worker operates the input portion 29b of the operating unit 29 to select a water removal mode 4 shown in Fig. 2 and press the set button. When the water removal mode 4 is selected, the controller 30 starts measuring the processing time of the water removing process.

By the above operation, the water in the hot water tank 9 is discharged through the fourth water discharge passage 42 to the outside of the fuel cell system 100. Thus, the water is removed from the hot water tank 9. Then, when the measured processing time has passed a time at which the water removing process may be completed, the controller 30 causes the input portion 29b of the operating unit 29 to inform that the water removal mode of the hot water tank 9 has been terminated (see Fig. 3). When an image showing that the water removal mode has been terminated is displayed on the display portion 29a of the operating unit 29, the maintenance worker visually confirms that the water removing process through the fourth water discharge passage 42 has been completed and manually closes the fourth water discharge valve 39 and the gas venting unit 38 (Step S504). Then, the maintenance worker presses the set button of the input portion 29b to set the termination of the water removal mode (Step S505). The termination of the water removal of the hot water tank 9 is determined based on whether or not a time it takes to remove the water from the hot water tank 9 has elapsed, the time being obtained in advance by experiments or the like.

Next, the maintenance worker replaces the temperature detector. When the replacement of the temperature detector is terminated, the water filling in the hot water tank 9 is performed.

As above, in accordance with the fuel cell system 100 of Embodiment 2, the water is removed from only the block (the exhaust heat recovered water passage 8 or the hot water tank 9), from which the water needs to be removed, of the water circulation passage. With this, the water removing operation can be performed more quickly than a case where the water in all the blocks of the water circulation passage is removed. In addition, the amount of time for the water filling operation performed after the water removing operation is reduced. Thus, the maintenance is completed more quickly.

In the case of performing the water removing process of all the blocks of the water circulation passage in the fuel cell system 100 according to Embodiment 2, as with the fuel cell system 100 according to Embodiment 1, the third water discharge valve 27 and the fourth water discharge valve 39 may be opened, and the gas venting unit 37 and the gas venting unit 38 may be activated (opened).

In the above water removing process, the maintenance worker opens and closes the first on-off valve 52, the second on-off valve 53, the third water discharge valve 27, the fourth water discharge valve 39, the gas venting unit 37, and the gas venting unit 38. However, the present embodiment is not limited to this, and the controller 30 may automatically open and close these components. In this case, after a predetermined water removal mode is selected by the maintenance worker (Step S403, S503), the controller 30 executes the operation of closing the first on-off valve 52 and the second on-off valve 53 (Step S401, S501) and opening the third water discharge valve 27 and the gas venting unit 37 (Step S402, S502).

### Embodiment 3

The fuel cell system of Embodiment 3 of the present invention will be explained in detail.

### Configuration

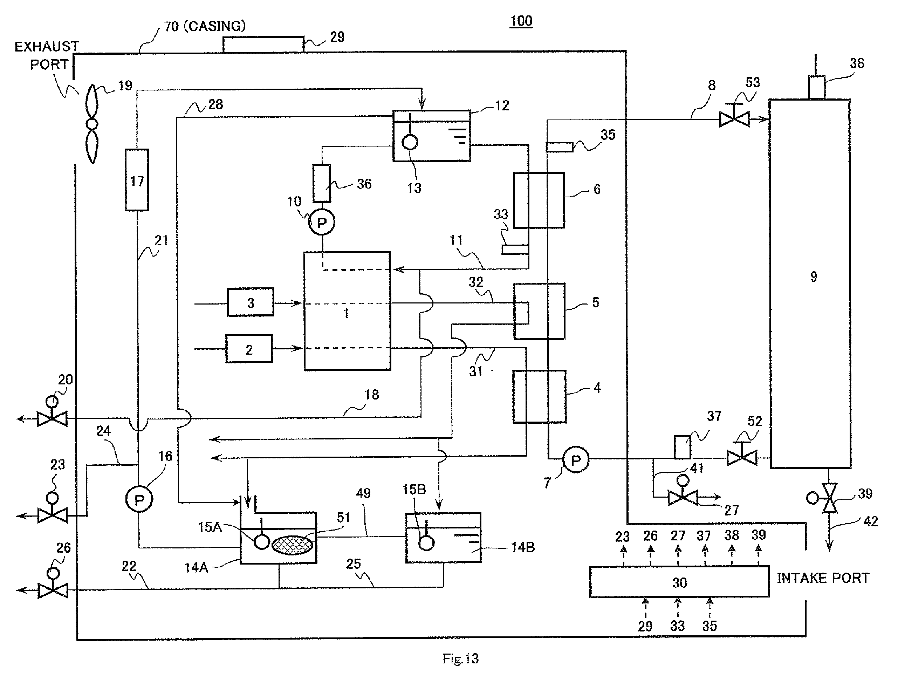

Fig. 13 is a block diagram schematically showing a schematic configuration of the fuel cell system according to Embodiment 3 of the present invention.

As shown in Fig. 13, the fuel cell system 100 of Embodiment 3 includes: the fuel cell 1 configured to generate electric power using the fuel gas and the oxidizing gas; the oxidizing gas supply unit 2 configured to supply the oxidizing gas to the fuel cell 1; a fuel gas supply unit 3 configured to supply the fuel gas to the fuel cell 1; a first condenser 4 configured to condense moisture contained in the off oxidizing gas discharged from a cathode gas channel in the fuel cell 1; a second condenser 5 configured to condense moisture contained in the off fuel gas discharged from an anode gas channel in the fuel cell 1; the first recovered water tank 14A configured to store recovered water including recovered water condensed and recovered by the first condenser 4; the water level detector 15A configured to detect the water level in the first recovered water tank 14A; the filter 51 configured to capture impurities in the first recovered water tank 14A; a second recovered water tank 14B configured to store recovered water condensed and recovered by the second condenser 5; a water level detector 15B configured to detect the water level in the second recovered water tank 14B; the cooling water passage 11 through which the cooling water for cooling the fuel cell 1 flows; the cooling water tank 12 configured to store the cooling water; the water level detector 13 configured to detect the water level in the cooling water tank 12; the first connection passage 21 through which the water supplied from the first recovered water tank 14A to the cooling water tank 12 flows; the first water pump 16 configured to cause the water to flow through the first connection passage 21 to the cooling water tank 12; the second connection passage 28 through which the water having overflowed from the cooling water tank 12 returns to the first recovered water tank 14A; the purifier 17 provided on the first connection passage 21 to purify the water in the first recovered water tank 14A; the second water pump 10 configured to cause the cooling water in the cooling water passage 11 to flow; the heater 36 configured to heat the cooling water in the cooling water passage 11; the first temperature detector 33 configured to detect the temperature of the cooling water in the cooling water passage 11; the exhaust heat recovered water passage (water passage) 8 through which water flows, the water recovering potential heat from the cooling water having cooled the fuel cell 1; the heat exchanger 6 configured to perform heat exchange between the cooling water in the cooling water passage 11 and the water in the exhaust heat recovered water passage 8; the second temperature detector 35 configured to detect the temperature of the water in the exhaust heat recovered water passage 8; the third water pump 7 configured to cause the water in the exhaust heat recovered water passage 8 to flow; and the hot water tank 9 configured to store hot water heated by the heat exchanger 6.

Here, in the fuel cell system of the present embodiment, a "first water tank" that is one example of a water supply source corresponds to the cooling water tank. A "second water tank" that is one example of the water supply source is constituted by the first recovered water tank 14A and the second recovered water tank 14B. However, the "second water tank" is not limited to the present example and may be constituted by one of the first recovered water tank 14A and the second recovered water tank 14B. To be specific, one of the recovered water recovered from the off fuel gas and the recovered water recovered from the off oxidizing gas may be supplied to a water utilizing device (for example, the cooling water tank 12). However, to prevent the off fuel gas from being discharged to the atmosphere, the second recovered water tank 14B needs to be configured not to be open to the atmosphere. Therefore, in the case of supplying the water to the water utilizing device, the water may be moved to a water tank, such as the first recovered water tank 14A, which is open to the atmosphere, to be indirectly supplied to the water utilizing device. A "hot water tank" that is one example of the water supply source corresponds to the hot water tank 9.

Moreover, examples of a "first maintenance part" are a filter (not shown) provided in the second water pump 10 and a filter (not shown) provided at an exit, through which the cooling water is supplied to the cooling water passage 11, of the cooling water tank 12 to capture impurities in the cooling water tank 12. Examples of a "second maintenance part" are the purifier 17 and the filter 51. For example, a container filled with ion-exchange resin is used as the purifier 17. The purifier 17 is not limited to the present example and may be any member, such as activated carbon, which purifies the recovered water supplied to the water utilizing device. The filter 51 is provided in the second recovered water tank 14B but may be provided at anywhere as long as it can suppress the inflow of the impurities into the first water pump 16. For example, the filter 51 may be provided on the first connection passage 21 to be located between the first water pump 16 and the second recovered water tank 14B.

Moreover, a "heater" corresponds to the heater 36. An electric heater or the like is used as the heater 36. Especially, a surplus electric power heater configured to consume surplus electric power of the fuel cell 1 is more preferable. The "heater" is provided on the cooling water passage 11. However, the "heater" is not limited to the present example and may be provided on the exhaust heat recovered water passage 8.

Further, examples of the "first abnormality detector" are the water level detector 13 configured to detect the water level in the cooling water tank 12, the first temperature detector 33 configured to detect the temperature of the cooling water flowing through the cooling water passage 11, and the rotation detector (not shown) configured to detect the number of rotations of the second water pump 10. Examples of the "second abnormality detector" are the temperature detector (not shown) configured to detect the temperature of the recovered water, the water level detector 15A configured to detect the water level in the first recovered water tank 14A, and the rotation detector (not shown) configured to detect the number of rotations of the first water pump 16. Examples of the "third abnormality detector" are the second temperature detector 35 configured to detect the temperature of the water flowing through the exhaust heat recovered water passage 8 and the rotation detector (not shown) configured to detect the number of rotations of the third water pump 7. Further, examples of the "fourth abnormality detector" are the temperature detector (not shown) configured to detect the temperature of the water in the hot water tank 9 and the water level detector (not shown) configured to detect the water level in the hot water tank 9.

The fuel cell system 100 of Embodiment 3 further includes: the first branched passage 24 through which the water in the first connection passage 21 is discharged to the outside of the passage; a fifth water discharge valve 23 configured to open the first branched passage 24 to discharge the water in the first connection passage 21 to the outside of the passage; the first water discharge passage 18 through which the water in the cooling water passage 11 is discharged to the outside of the passage; the first water discharge valve 20 configured to open the first water discharge passage 18 to discharge the water in the cooling water passage 11 to the outside of the passage; the third water discharge passage 41 through which the water in the exhaust heat recovered water passage 8 is discharged to the outside of the passage; the third water discharge valve 27 configured to open the third water discharge passage 41 to discharge the water in the exhaust heat recovered water passage 8 to the outside of the passage; a second water discharge passage 22 and a second water discharge passage 25 through which the water in the first recovered water tank 14A and the water in the second recovered water tank 14B are discharged to the outside of the tanks; the second water discharge valve 26 configured to open the second water discharge passage 22 and the second water discharge passage 25 to discharge the water in the first recovered water tank 14A and the water in the second recovered water tank 14B to the outside of the tanks; the fourth water discharge passage 42 through which the water in the hot water tank 9 is discharged to the outside of the tank; and the fourth water discharge valve 39 configured to open the fourth water discharge passage 42 to discharge the water in the hot water tank 9 to the outside of the tank. The water discharged by opening the first to fifth water discharge valves is discharged to the outside of the fuel cell system 100 and flows to, for example, a sewer infrastructure.

The first on-off valve 52 and the second on-off valve 53 are provided on the exhaust heat recovered water passage 8. Specifically, the first on-off valve 52 is provided on a portion, through which the water having not yet recovered the exhaust heat of the fuel cell 1 flows, of the exhaust heat recovered water passage 8. The second on-off valve 53 is provided on a portion, through which the water having recovered the exhaust heat of the fuel cell 1 flows, of the exhaust heat recovered water passage 8. To be specific, the first on-off valve 52 is provided on the exhaust heat recovered water passage 8 to be located upstream of the heat exchanger and the condenser, such as the first condenser 4, configured to recover the exhaust heat of the fuel cell 1. The second on-off valve 53 is provided on the exhaust heat recovered water passage 8 to be located downstream of the first condenser 4 and the like.

In Embodiment 1, the cooling water passage 11 and the cooling water tank 12 constitute the first water circulation passage, and the first connection passage 21, the second connection passage 28, the cooling water tank 12, and the first recovered water tank 14A constitute the second water circulation passage. The first and second water circulation passages constitute one water circulation passage.

As described above, the cooling water tank 12 constitutes the separation mechanism. Specifically, the water in the first recovered water tank 14A is supplied through the first connection passage 21 to the cooling water tank 12 by the operation of the first water pump 16, and the water having overflowed from the cooling water tank 12 is supplied through the second connection passage 28 to the first recovered water tank 14A. The cooling water tank 12 serves as the separation mechanism by the stop of the first water pump 16.

Further, the exhaust heat recovered water passage 8 constitutes another water circulation passage, and the first on-off valve 52 and the second on-off valve 53 constitute the separation mechanism. To be specific, by closing the first on-off valve 52 and the second on-off valve 53, the block including the hot water tank 9 (to be precise, the block including the hot water tank 9, a portion, located upstream of the first on-off valve 52, of the exhaust heat recovered water passage 8, and a portion, located downstream of the second on-off valve 53, of the exhaust heat recovered water passage 8) and the block including the exhaust heat recovered water passage 8 (to be precise, the block including a portion of the exhaust heat recovered water passage 8, the portion being located downstream of the first on-off valve 52 and upstream of the second on-off valve 53) are separated from each other. Thus, the water is divided between these blocks.

To remove the water from the above water passages, the water passage from which the water is removed is opened to the atmosphere. The first connection passage 21 is opened to the atmosphere through the cooling water tank 12, the second connection passage 28, and the first recovered water tank 14A which is open to the atmosphere. As with the first connection passage 21, the cooling water passage 11 is opened to the atmosphere through the cooling water tank 12, the second connection passage 28, and the first recovered water tank 14A which is open to the atmosphere. Regarding the water removal of the exhaust heat recovered water passage 8, the exhaust heat recovered water passage 8 is opened to the atmosphere by opening the gas venting unit 37. The first recovered water tank 14A and the second recovered water tank 14B are opened to the atmosphere by the first recovered water tank 14A configured to be open to the atmosphere. The hot water tank 9 is opened to the atmosphere by opening the gas venting unit 38.

The cooling water tank 12 is provided above the first recovered water tank 14A. The cooling water tank 12 and the first recovered water tank 14A are provided to form a rising slope from the first recovered water tank 14A toward the cooling water tank 12. By opening the fifth water discharge valve 23, the water in the first connection passage 21 and thus the water in the purifier 17 are discharged by their own weight through the first branched passage 24.

The fuel cell system of the present embodiment includes the casing 70 having the intake port and the exhaust port, and the casing 70 accommodates the fuel cell 1, the above water passages, and the water tanks. The exhaust unit 19 configured to discharge gases (the air, the fuel gas, and the like) in the casing 70 to the outside is provided in the vicinity of the exhaust port of the casing 70. Examples of the exhaust unit 19 are fans, such as a blower and a sirocco fan. The first to fifth water discharge valves and the gas venting units 37 and 38 are provided outside the casing 70.

The controller 30 is configured to determine based on signals from the first temperature detector 33 and the second temperature detector 35 whether or not the failures of the first temperature detector 33 and the second temperature detector 35 and the failure of the heater 36 have occurred. Moreover, the controller 30 is configured to inform the outside by a display portion (not shown in Fig. 12) of the operating unit (command acquiring unit) 29 that the failures of respective abnormality detectors have occurred. Further, the controller 30 is configured to also determine whether or not the time for replacement of the purifier 17 or the filter 51 has come. Specifically, the controller 30 includes a timer device, not shown, and is configured to inform the outside by the display portion (not shown in Fig. 12) of the operating unit 29 that the replacement of the purifier 17 or the filter 51 is necessary, in a case where an accumulated value of the time, measured by the timer device, of the electric power generating operation of the fuel cell system is equal to or longer than a time threshold which requires the replacement of the purifier 17 or the filter 51.

### Operations

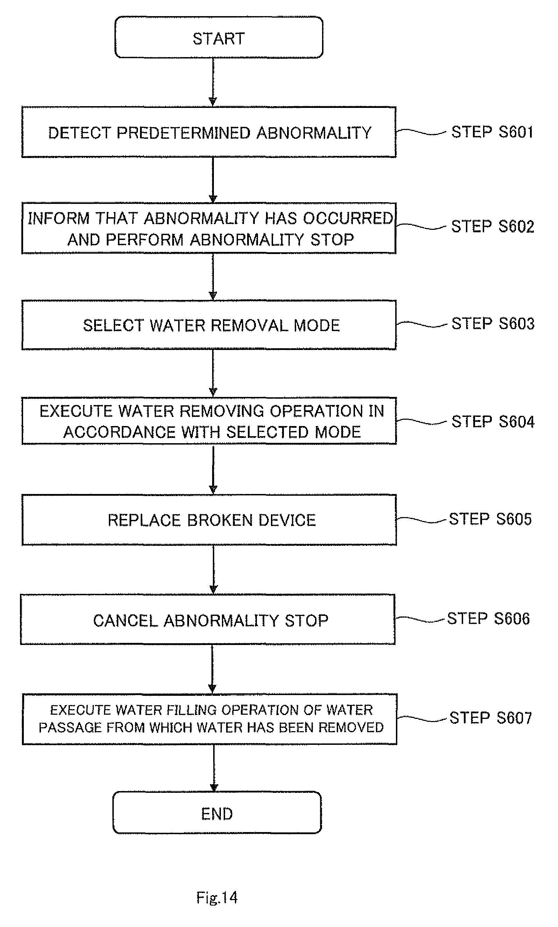

The following will explain a series of operations including the water removing operation performed when the first maintenance part and/or the second maintenance part provided on the water circulation passage that is one feature of the fuel cell system of the present embodiment are replaced or when the controller 30 has detected the abnormalities of the first to fourth abnormality detectors. Fig. 14 is a flow chart showing a series of steps including the water removing operation of the fuel cell system 100 shown in Fig. 13.

Here, when the controller 30 detects the abnormality by any one of the first to fourth abnormality detectors as shown in Fig. 14 (Step S601), the controller 30 informs the display portion (not shown) of the operating unit 29 by using an error code or the like that the abnormality has been detected and also informs the maintenance company that the abnormality has occurred, and performs the abnormality stop of the electric power generating operation of the fuel cell system 100 (Step S602). After the abnormality stop of the electric power generating operation of the fuel cell system 100, the maintenance worker specifies the block, from which the water needs to be removed, of the water circulation passage based on an abnormality message displayed on the display portion (not shown). Then, to remove the water from the specified block, the maintenance worker suitably, manually opens and closes the first to fifth water discharge valves, the gas venting units, and the like. In addition, the maintenance worker operates the operating unit 29 to select the water removal mode corresponding to the block, from which the water needs to be removed, by using an up-down key and press the set button, thereby setting the water removal mode (Step S603). When a signal indicating the water removal mode selected through the operating unit 29 is output to the controller 30, the controller 30 controls the first water pump 16, the second water pump 10, and the like to execute the water removing operation corresponding to the selected water removal mode (Step S604).

Specifically, in a case where the failure (breaking of wire, short, or the like) of the first temperature detector 33 is detected based on the signal transmitted from the first temperature detector 33, the controller 30 causes the display portion 29a of the operating unit 29 to display an error display image corresponding to this failure and informs the maintenance company that the failure of the first temperature detector 33 has occurred. Then, based on this error display image, the maintenance worker of the maintenance company which has received the information of the failure manually opens the first water discharge valve 20 and selects and sets the water removal mode (for example, the water removal mode 1 shown in Fig. 2). Then, the controller 30 keeps the stop states of the first water pump 16 and the second water pump 10.

With this, the cooling water tank 12 serves as the separation mechanism configured to divide the water circulation passage into a first block including the cooling water passage 11 and the cooling water tank 12 and a second block including the first connection passage 21, the second connection passage 28, and the first recovered water tank 14A and to divide the water between these blocks. Only the cooling water in the cooling water passage 11 including the first temperature detector 33 which needs to be replaced is discharged through the first water discharge passage 18 to the outside of the fuel cell system.

Next, after the completion of the water removing operation, the maintenance worker replaces the broken device (Step S605). Then, the maintenance worker operates the operating unit 29 to cancel the abnormality stop state (Step S606) and further operates the operating unit 29 to execute the water filling operation of the water passage from which the water has been discharged by the above water removing operation (Step S607). Here, in Step S604, the water is removed from only the water passage including the broken device. Therefore, the amount of time for the water filling operation becomes shorter than that in a case where the water is removed from all the blocks of the water circulation passage. Thus, the maintenance is completed more quickly. Next, when the water filling operation is completed, the fuel cell system shifts to a stand-by state for the next start-up.

Here, the above "abnormality stop state" is a state in which the controller 30 does not allow the start-up of the fuel cell system 100 even when a start-up request is made, and the above "stand-by state" is a state in which the controller 30 starts the start-up process of the fuel cell system 100 when the start-up request is made. The above expression "the start-up request is made" denotes a case where an operation start command is input by operating the operating unit 29, a case where a time set as a start-up time of the fuel cell system 100 has come, a case where an electric power demand of an electric power load is equal to or more than a predetermined electric power threshold which requires the electric power generating operation of the fuel cell system 100, or the like.

Next, the following will explain the water removing operation performed when the purifier 17 that is the second maintenance part is replaced due to its operating life, not the water removing operation performed at the time of the replacement of the broken device. Other than the device to be replaced, the water removal mode to be selected, and the water removing operation corresponding to the selected water removal mode, the operations herein are the same as the above series of operations including the water removing operation performed at the time of replacement of the broken first temperature detector 33, so that explanations thereof are omitted.

As explained above, when the accumulated value of the time of the electric power generating operation of the fuel cell system 100 is equal to or longer than a predetermined time threshold which requires the replacement of the purifier 17, the controller 30 causes the display portion of the operating unit 29 to show that the purifier 17 needs to be replaced and informs the maintenance company that the purifier 17 needs to be replaced. The controller performs the abnormality stop of the fuel cell system 100. After the abnormality stop of the fuel cell system 100, the maintenance worker manually opens the fifth water discharge valve 23 and selects and sets the water removal mode (for example, the water removal mode 2) corresponding to the replacement of the purifier 17.

Then, the controller 30 keeps the stop state of the first water pump 16. In the water removing process, the first connection passage 21 and the first branched passage 24 that are rising slopes serve as the separation mechanism configured to divide the second block of the water circulation passage into a block including the first connection passage 21 and a block including passages other than the first connection passage 21 and to divide the water between these blocks. Thus, only the water in the block (the first connection passage 21) including the purifier 17 which needs to be replaced is discharged to the outside of the fuel cell system 100. Therefore, the amount of time for the water filling operation performed after the replacement of the purifier 17 becomes shorter than that in a case where the water in the water tanks (the cooling water tank 12, the first recovered water tank 14A, and the second recovered water tank 14B) communicating with the first connection passage 21 is simultaneously discharged. Thus, the maintenance is completed more quickly.

Next, in a case where the water circulation passage is constituted by the exhaust heat recovered water passage 8 and the hot water tank 9, and the failure (breaking of wire, short, or the like) of the second temperature detector 35 provided on the exhaust heat recovered water passage 8 is detected as the abnormality of the water circulation passage (the abnormality of the third abnormality detector is detected), the maintenance worker manually closes the first on-off valve 52 and the second on-off valve 53, manually opens the third water discharge valve 27, and opens the gas venting unit 37. Then, the maintenance worker selects and sets the water removal mode (for example, the water removal mode 3) of the exhaust heat recovered water passage 8 through the operating unit 29. Then, the controller 30 keeps the stop state of the third water pump 7. With this, the first on-off valve 52 and the second on-off valve 53 serve as the separation mechanism configured to divide the water circulation passage into the block including the hot water tank 9 (to be precise, the block including the hot water tank 9, a portion, located upstream of the first on-off valve 52, of the exhaust heat recovered water passage 8, and a portion, located downstream of the second on-off valve 53, of the exhaust heat recovered water passage 8) and the block including the exhaust heat recovered water passage 8 (to be precise, the block including a portion of the exhaust heat recovered water passage 8, the portion being located downstream of the first on-off valve 52 and upstream of the second on-off valve 53) and to divide the water between these blocks. Thus, only the water in the exhaust heat recovered water passage 8 including the second temperature detector 35 which needs to be replaced is discharged to the outside of the fuel cell system 100. Therefore, the amount of time for the water filling operation performed after the replacement of the second temperature detector 35 becomes much shorter than that in a case where the water in the water tank (hot water tank 9) communicating with the exhaust heat recovered water passage 8 is simultaneously discharged. Thus, the maintenance is completed more quickly.

At the time of the replacement of the device provided on the water circulation passage, the fuel cell system 100 of Embodiment 3 selects the corresponding water removal mode to execute the water removing operation. In addition, the fuel cell system 100 of Embodiment 3 includes the water removal mode in which the water in all the blocks of the water circulation passage is discharged in advance to the outside of the fuel cell system 100 in a case where the user is aware of the possibility of freezing of the water in the water circulation passage in advance based on information, such as weather forecast, or in a case where there is a possibility of the rottenness or freezing of the water in the water circulation passage since the user is away for a long period of time and the fuel cell system 100 is not used for a long period of time.

Specifically, in a case where there is the above possibility, the user manually opens the first to fifth water discharge valves and the gas venting units 37 and 38 and operates the operating unit 29 to select and set the all water removal mode. With this, the water is removed from all the blocks of the water circulation passage. Thus, the freezing and rottenness of the water in the water passage can be avoided in advance.

### Modification Example 1

The fuel cell system 100 of Embodiment 3 is configured such that when replacing the replaceable device (the filter 51, the purifier 17, the temperature detector 33 or 35, or the heater 36) provided on the water circulation passage, the maintenance worker operates the operating unit 29 to select the water removal mode corresponding to the device to be replaced. However, the fuel cell system 100 of Modification Example 1 is configured such that without the selection of the water removal mode by the maintenance worker through the operating unit 29, the controller 30 automatically executes the water removing operation corresponding to the device to be replaced. Specifically, a program which executes the water removing operation corresponding to the device whose failure has been detected or the device whose time for replacement has come is stored in a storage device, not shown. When the failure of the device is detected or when the time for replacement has come, the water removing operation corresponding to the device to be replaced is executed in accordance with this program. Specific steps of the water removing operation executed in accordance with the device to be replaced are the same as those in Embodiment 3, so that explanations thereof are omitted. With this, in accordance with the fuel cell system 100 of Modification Example 1, some water has already been removed before the arrival of the maintenance worker, so that the standby time of the maintenance worker until the completion of the water removing operation is reduced. Thus, the maintenance is completed more quickly.

### Modification Example 2

In accordance with the fuel cell system 100 of each of Embodiment 3 and Modification Example 1, when the purifier 17 needs to be replaced, the fifth water discharge valve 23 is opened, and only the water in the water passage including the purifier 17 is discharged. However, the fuel cell system of Modification Example 2 is configured such that the water in the cooling water tank 12 is also discharged to the outside of the fuel cell system 100. To be specific, in Modification Example 2, the fifth water discharge valve 23 is opened, and in addition, the first water discharge valve 20 is also opened. In Modification Example 2, the first water discharge valve 20 is opened to discharge the water in the cooling water tank 12. However, Modification Example 2 is not limited to the present example. Modification Example 2 may be configured such that a water discharge passage (not shown) and a water discharge valve (not shown), by which only the water in the cooling water tank 12 can be discharged, are provided, and the water in the cooling water tank 12 is removed by opening this water discharge valve.

The reason why the water in not only the first connection passage 21 but also the cooling water tank 12 is removed when replacing the purifier 17 is because when the water filling operation of the first connection passage 21 is executed after the replacement of the purifier 17 by operating the first water pump 16 to supply the water in the first recovered water tank 14A to the first connection passage 21, whether or not the water filling operation of the first connection passage 21 is properly executed can be determined by the water level detected by the water level detector 13. To be specific, when the higher water level than the water level at the time of the completion of the water removing operation is detected by the water level detector 13 at the time of the water filling operation of the first connection passage 21, it is possible to determine that the water filling of the first connection passage 21 has been properly executed.

### Modification Example 3

The fuel cell system of Modification Example 3 will be explained in detail.

### Configuration

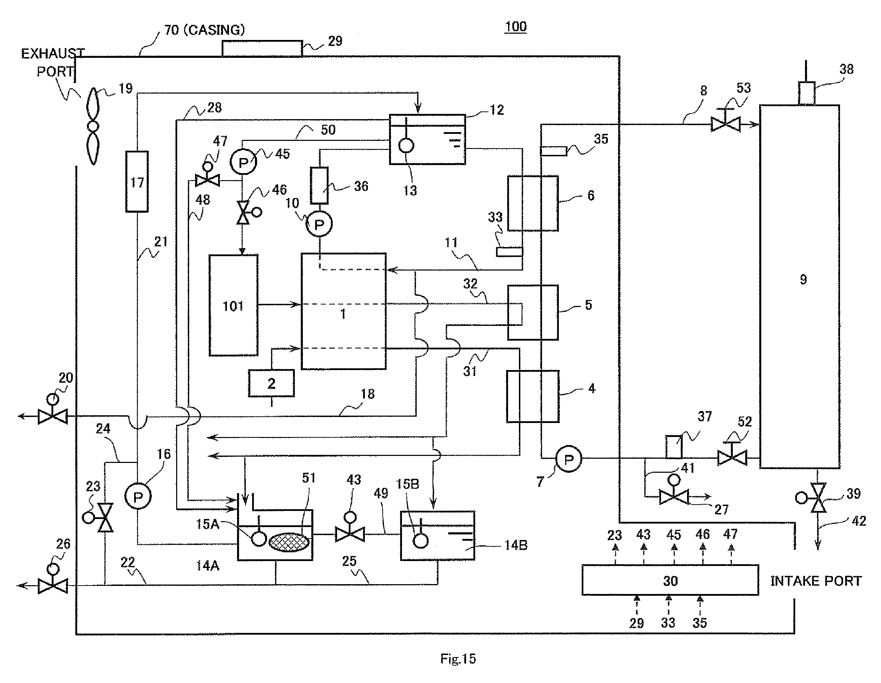

Fig. 15 is a block diagram schematically showing a schematic configuration of the fuel cell system of Modification Example 3. As shown in Fig. 15, the fuel cell system 100 of Modification Example 3 includes: the hydrogen generator 101 configured to generate hydrogen by a reforming reaction using a raw material and steam, instead of the fuel gas supply unit 3 of the fuel cell system 100 of Embodiment 3; the reforming water passage 50 through which the water (reforming water) used as the above steam is supplied from the cooling water tank 12 to the hydrogen generator 101; the branched passage 48 branching from the reforming water passage 50 and connected to the first recovered water tank 14A; the fourth water pump 45 provided on the reforming water passage 50; the third on-off valve 46 and the fourth on-off valve 47 which are provided to switch a destination to which the water from the cooling water tank 12 flows, between the hydrogen generator 101 and the first recovered water tank 14A; and a fifth on-off valve 43 provided on a communication passage 49 extending between the first recovered water tank 14A and the second recovered water tank 14B. As shown in Fig. 15, the third on-off valve 46 is provided on the reforming water passage 50 to be located downstream of a branch point where the branched passage 48 branches from the reforming water passage 50, and the fourth on-off valve 47 is provided on the branched passage 48. The first branched passage 24 meets a portion of the second water discharge passage 22, the portion being located upstream of the second water discharge valve 26. Instead of the third on-off valve 46 and the fourth on-off valve 47, a three-way valve may be provided on the branch point where the branched passage 48 branches from the reforming water passage 50.

The other configurations are the same as those of the fuel cell system of Embodiment 3, so that explanations thereof are omitted.

### Operations

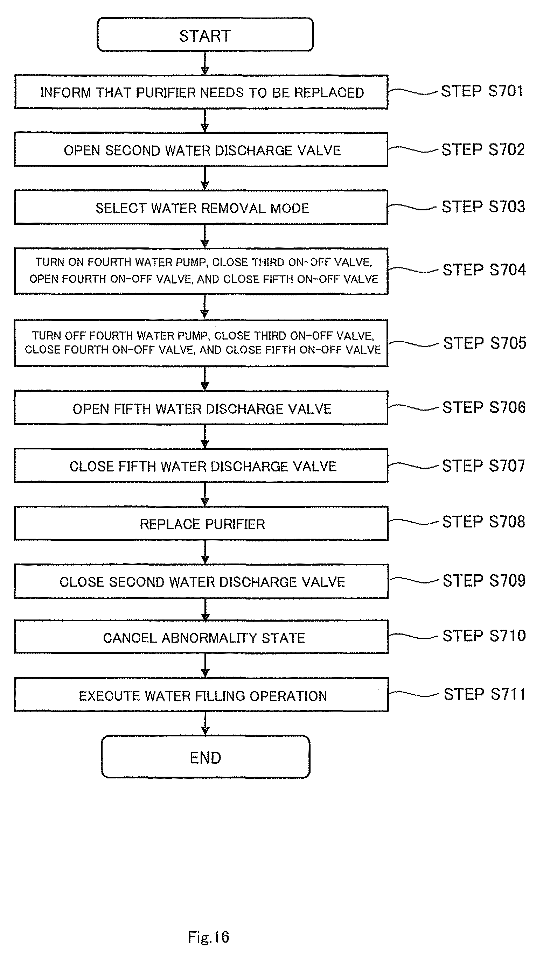

Next, a series of operations including the water removing operation performed when replacing the purifier 17 in the fuel cell system of Modification Example 3 will be explained. Fig. 16 is a flow chart showing a series of steps including the water removing operation of the fuel cell system 100 shown in Fig. 15.

When the controller 30 determines that the operating life of the purifier 17 is close to the end, as with Embodiment 3, the controller 30 causes the display portion of the operating unit 29 to show that the purifier 17 needs to be replaced (Step S701), informs the maintenance company that the failure has occurred, and performs the abnormality stop of the fuel cell system 100. Then, the maintenance worker manually opens the second water discharge valve 26 (Step S702). When the maintenance worker operates the operating unit 29 to select and set the water removal mode (for example, the water removal mode 2) corresponding to the replacement of the purifier 17 (Step S703), the controller 30 closes the third on-off valve 46 and the fifth on-off valve 43, opens the fourth on-off valve 47, and activates the fourth water pump 45 (Step S704). Then, the recovered water in the first recovered water tank 14A is discharged through the second water discharge passage 22 to the outside of the fuel cell system 100, and the cooling water in the cooling water tank 12 is discharged through the reforming water passage 50, the branched passage 48, the first recovered water tank 14A, and the second water discharge passage 22 to the outside of the fuel cell system 100. When it is determined based on the signals of the water level detectors 13 and 15A that the water removal of the first recovered water tank 14A and the cooling water tank 12 is completed, the controller 30 closes the fourth on-off valve 47 and stops the operation of the fourth water pump 45 to complete the water removing operation of the first recovered water tank 14A and the cooling water tank 12 (Step S705). Next, the controller 30 opens the fifth water discharge valve 23 to remove the water in the water passage (first connection passage 21) including the purifier 17 (Step S706). When the water removal of the first connection passage 21 is completed, the controller 30 closes the fifth water discharge valve 23 (Step S707), and the maintenance worker replaces the purifier 17 (Step S708). When the replacement of the purifier 17 is completed, the maintenance worker manually closes the second water discharge valve 26 (Step S709) and operates the operating unit 29 to cancel the abnormality stop state (Step S710). Then, the maintenance worker operates the operating unit 29 to execute the water filling operation (Step S711). When the water filling operation is completed, the fuel cell system shifts to the stand-by state.

The reason why the water in the cooling water tank 12 is discharged in the above series of operations is because as with the fuel cell system of Modification Example 2, the completion of the water filling operation of the first connection passage 21 is confirmed by the water level detected by the water level detector 13.

### Modification Example 4

The fuel cell system 100 of each of Embodiment 3 and Modification Examples 1 to 3 is configured such that the maintenance worker manually opens and closes the first to fifth water discharge valves and the gas venting units 37 and 38. However, the fuel cell system 100 of Modification Example 4 is configured such that each of the first to fifth water discharge valves and the gas venting units 37 and 38 is configured to be openable and closable by the controller 30. Therefore, when the failure of the device has occurred or when the time for replacement of the purifier 17 has come, the controller 30 opens the appropriate water discharge valve(s) and/or gas venting unit(s) among the first to fifth water discharge valves and the gas venting units 37 and 38 in accordance with the water removal mode selected and set by the maintenance worker such that only the water of the block of the water circulation passage from which the water needs to be removed is discharged to the outside of the fuel cell system 100. The water discharge valve(s) and/or the gas venting unit(s) which are opened by the controller 30 for the replacement of the device are the same as those in the fuel cell system 100 of each of Embodiment 3 and Modification Examples 1 to 3, so that explanations thereof are omitted.

In a case where the user is aware of the possibility of freezing of the water in the water circulation passage in advance or in a case where the user is away for a long period of time, the user selects and sets the all water removal mode of the operating unit 29. With this, the controller 30 opens all of the first to fifth water discharge valves and the gas venting units 37 and 38, so that the water is removed from all the blocks of the entire water circulation passage. Thus, the freezing and rottenness of the water in the water circulation passage can be avoided in advance.

### Embodiment 4

In the fuel cell system according to Embodiment 4 of the present invention, the water circulation passage includes the first water circulation passage, the second water circulation passage, the hot water tank, and the water passage.

### Configuration of Fuel Cell System

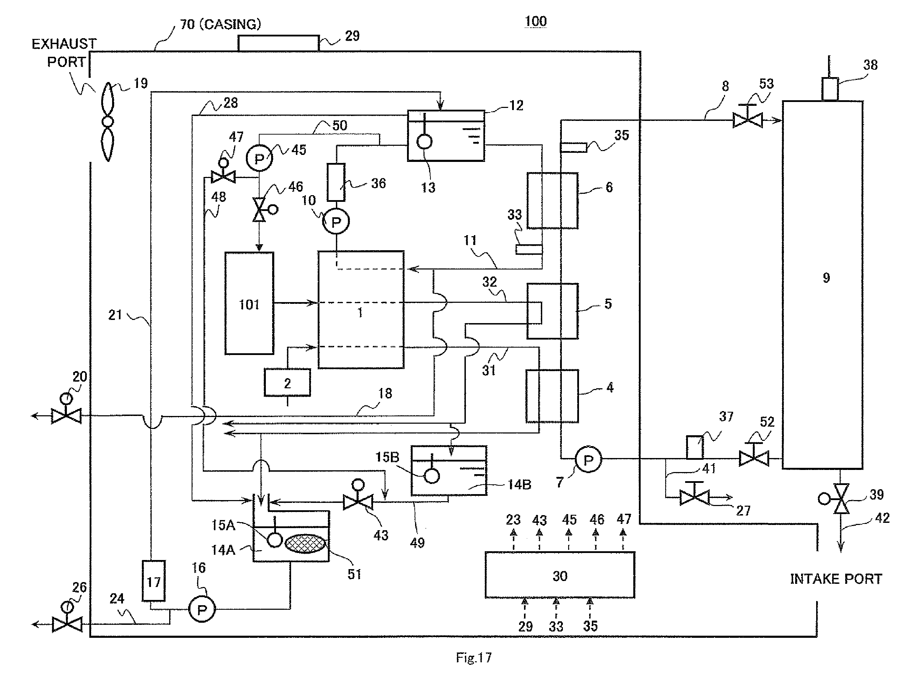

Fig. 17 is a block diagram schematically showing a schematic configuration of the fuel cell system according to Embodiment 4 of the present invention.

As shown in Fig. 17, the fuel cell system 100 according to Embodiment 4 of the present invention is the same in basic configuration as the fuel cell system 100 according to Embodiment 1 of the present invention but is different from the fuel cell system 100 according to Embodiment 1 of the present invention in that: the fuel cell system 100 according to Embodiment 4 includes the first on-off valve 52, the second on-off valve 53, the gas venting unit 37, the gas venting unit 38, the third water discharge valve 27, the third water discharge passage 41, the fourth water discharge valve 39, and the fourth water discharge passage 42 such that the exhaust heat recovered water passage 8 and the hot water tank 9 constitute a water circulation passage; the second water circulation passage further includes the second recovered water tank 14B and the communication passage 49; and the fuel cell system 100 further includes the first condenser 4 and the second condenser 5. The first on-off valve 52, the second on-off valve 53, the gas venting unit 37, the gas venting unit 38, the third water discharge valve 27, the third water discharge passage 41, the fourth water discharge valve 39, and the fourth water discharge passage 42 are the same in configuration as those in the fuel cell system 100 according to Embodiment 2, so that explanations thereof are omitted. In addition, as with Embodiment 2, the fuel cell system 100 according to Embodiment 4 includes the third abnormality detector (for example, the second temperature detector 35 provided on the exhaust heat recovered water passage 8) and the fourth abnormality detector (for example, the temperature detector (not shown) provided in the hot water tank 9).

Specifically, the first condenser 4 is configured to perform heat exchange between the water flowing through the exhaust heat recovered water passage 8 and the off oxidizing gas flowing through the oxidizing gas discharge passage 31 to condense the moisture contained in the off oxidizing gas. The second condenser 5 is configured to perform heat exchange between the water flowing through the exhaust heat recovered water passage 8 and the off fuel gas flowing through the fuel gas discharge passage 32 to condense the moisture contained in the off fuel gas. The water (recovered water) condensed by the first condenser 4 is stored in the first recovered water tank 14A, and the water (recovered water) condensed by the second condenser 5 is stored in the second recovered water tank 14B. The second recovered water tank 14B is provided to be located above the first recovered water tank 14A. The recovered water stored in the second recovered water tank 14B is supplied through the communication passage 49 to the first recovered water tank 14A.

The water level detector 15B configured to detect the water level in the second recovered water tank 14B is provided at the second recovered water tank 14B. The water level detector 15B may be any device as long as it can detect the water level in the second recovered water tank 14B and output the detected water level to the controller 30. Examples of the water level detector 15B are a float type water level detector and a hydraulic type water level detector.

The fifth on-off valve 43 configured to allow the water to flow through the communication passage 49 and block the water in the communication passage 49 is provided on the communication passage 49. The fifth on-off valve 43 may be constituted by an automatic on-off valve whose open and close states are controlled by the controller 30 or may be constituted by a manual on-off valve which is opened and closed by a user or a maintenance worker. In Embodiment 4, a downstream end of the branched passage 48 is connected to a portion of the communication passage 49, the portion being located upstream of the fifth on-off valve 43 (located on a side where the second recovered water tank 14B is provided).

### Operations of Fuel Cell System

Next, the water removing operation of the fuel cell system 100 according to Embodiment 4 will be explained.

First, the water removing process of the first water circulation passage of the fuel cell system 100 according to Embodiment 4 is the same as that of the fuel cell system 100 according to Embodiment 1, so that an explanation thereof is omitted.

The water removing operation of the second water circulation passage of the fuel cell system 100 according to Embodiment 4 is the same as that of the fuel cell system 100 according to Embodiment 1. However, the water removing operation of the second water circulation passage is different between a case where the water in the second recovered water tank 14B is removed and a case where the water in the second recovered water tank 14B is not removed. Specifically, in a case where the water in the second recovered water tank 14B is removed, the controller 30 opens the fifth on-off valve 43 to discharge the water in the second recovered water tank 14B through the communication passage 49, the first recovered water tank 14A, the first connection passage 21, and the first branched passage 24 to the outside of the fuel cell system 100. In contrast, in a case where the water in the second recovered water tank 14B is not removed, the controller 30 keeps the close state of the fifth on-off valve 43.

The water removal of the water passage (exhaust heat recovered water passage 8) and the water removal of the hot water tank 9 in the fuel cell system 100 according to Embodiment 4 are the same as those in the fuel cell system 100 according to Embodiment 2, so that explanations thereof are omitted.

### Water Removing Process of All Blocks of Water Circulation Passage

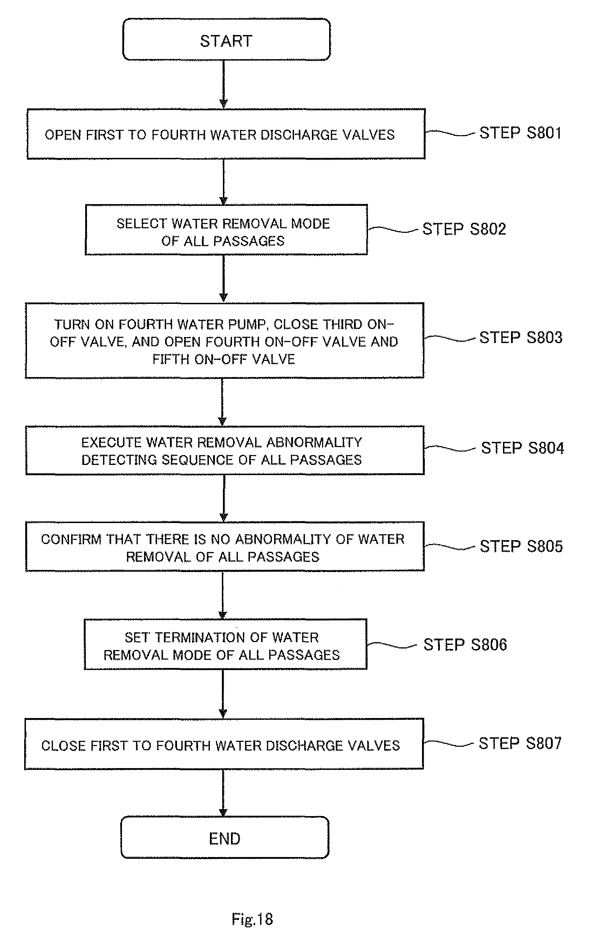

Fig. 18 is a flow chart schematically showing the water removing process of all the blocks of the water circulation passage of the fuel cell system 100 shown in Fig. 17.

As described above, the fuel cell system 100 according to Embodiment 4 includes a water circulation passage constituted by the first water circulation passage and the second water circulation passage and a water circulation passage constituted by the exhaust heat recovered water passage 8 and the hot water tank 9. Therefore, in the case of removing the water in all the blocks of the water circulation passage, the water in all the blocks of these two water circulation passages is removed. Hereinafter, the water removing process of all the blocks of the water circulation passage of the fuel cell system 100 according to Embodiment 4 will be explained in reference to Fig. 18.

As shown in Fig. 18, the user manually opens the first water discharge valve 20, the second water discharge valve 26, the third water discharge valve 27, and the fourth water discharge valve 39 (Step S801) and selects the water removal mode of all the blocks of the water circulation passage (Step S802). Specifically, the user operates the input portion 29b of the operating unit 29 to select the all water removal mode shown in Fig. 2 and press the set button. When the all water removal mode is selected, the controller 30 keeps the stop states of the first water pump 16 and the second water pump 10, keeps the close state of the third on-off valve 46, opens the fourth on-off valve 47 and the fifth on-off valve 43, and activates the fourth water pump 45 (Step S803). With this, the water in the first water circulation passage is discharged through the first water discharge passage 18, and the water in the second water circulation passage is discharged through the first branched passage 24. Moreover, the water in the exhaust heat recovered water passage 8 is discharged through the third water discharge passage 41, and the water in the hot water tank 9 is discharged through the fourth water discharge passage 42. Further, by the operation of the fourth water pump 45, the water in the branched passage 48 is also removed through the first recovered water tank 14A and the first branched passage 24. Thus, the water in all the blocks of the water circulation passage is removed.

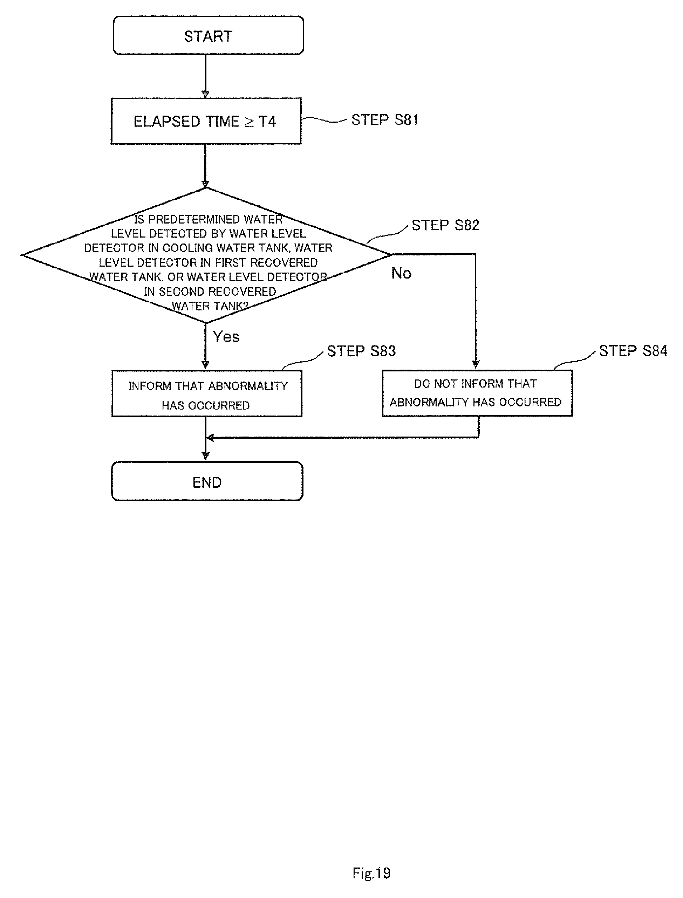

When the all water removal mode is selected in Step S802, the controller 30 executes the water removal abnormality detecting sequence of all the blocks of the water circulation passage (Step S804). Here, the water removal abnormality detecting sequence of all the blocks of the water circulation passage will be explained in reference to Fig. 19.

Fig. 19 is a flow chart schematically showing the water removal abnormality detecting sequence of all the blocks of the water circulation passage in the water removing process of the fuel cell system 100 shown in Fig. 18.

As shown in Fig. 9, when an elapsed time since the selection of the all water removal mode in Step S802 becomes equal to or longer than T4 (Step S81), the controller 30 determines by the water level detector 13 whether or not the water is remaining in the cooling water tank 12, determines by the water level detector 15A whether or not the water is remaining in the first recovered water tank 14A, and determines by the water level detector 15B whether or not the water is remaining in the second recovered water tank 14B (Step S82). Here, T4 is a time equal to or longer than a time necessary to discharge the water remaining in all the blocks of the water circulation passage to the outside of the fuel cell system 100 and is determined in advance by experiments or the like. A method for determining by the water level detector 13 whether or not the water is remaining in the cooling water tank 12 and a method for determining by the water level detector 15A whether or not the water is remaining in the first recovered water tank 14A are the same as those of the water removing process of all the blocks in Embodiment 1, so that explanations thereof are omitted. Whether or not the water is remaining in the second recovered water tank 14B is determined by the water level detector 13B in the same manner as above. That is, when the water level equal to or higher than the lower detection limit of the water level detector 13B is detected, it is determined that the water is remaining in the second recovered water tank 14B. When the water level equal to or higher than the lower detection limit of the water level detector 13B is not detected, it is determined that the water is not remaining in the second recovered water tank 14B.

Then, when the controller 30 determines by at least one of the water level detector 13, the water level detector 15A, and the water level detector 15B that the water is remaining in the cooling water tank 12, the first recovered water tank 14A, or the second recovered water tank 14B (Yes in Step S82), the controller 30 causes the display portion 29a of the operating unit 29 to inform that the abnormality has occurred (Step S83) and terminates the present sequence. In contrast, when the controller 30 determines by the water level detector 13, the water level detector 15A, and the water level detector 15B that the water is not remaining in the cooling water tank 12, the first recovered water tank 14A, and the second recovered water tank 14B, the controller 30 does not cause the display portion 29a to inform that the abnormality has occurred (Step S84) and terminates the present sequence.

Next, when the controller 30 confirms that there is no abnormality in all the blocks of the water circulation passage in the water removal abnormality detecting sequence (Step S805) and confirms that the water removal is terminated, the controller 30 causes the input portion 29b of the operating unit 29 to inform that the water removal mode of all the blocks of the water circulation passage has been terminated (see Fig. 3), and the maintenance worker presses the set button of the input portion 29b to set the termination of the water removal mode (Step S806). With this, the controller 30 stops the fourth water pump 45 and closes the fourth on-off valve 47 and the fifth on-off valve 43. Here, the fourth on-off valve 47 and the fifth on-off valve 43 may not be closed.

Next, the maintenance worker manually closes the first water discharge valve 20, the second water discharge valve 26, the third water discharge valve 27, and the fourth water discharge valve 39 (Step S807).

The fuel cell system 100 of Embodiment 4 configured as above obtains the same operational advantages as that of Embodiment 1.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention. In addition, various inventions can be made by suitable combinations of a plurality of components disclosed in the above embodiments.

### Industrial Applicability

In accordance with the fuel cell system of the present invention and the method for removing the water of the fuel cell system, the water is removed from the block, from which the water needs to be removed, of the water circulation passage. Therefore, the amount of time for the water filling operation performed after the water removing operation can be reduced. Thus, the maintenance can be completed more quickly. On this account, the fuel cell system of the present invention is useful as, for example, a fuel cell system of home use or professional use.

### Reference Signs List

- 1: fuel cell
- 2: oxidizing gas supply unit
- 3: fuel gas supply unit
- 4: first condenser
- 5: second condenser
- 6: heat exchanger
- 7: third water pump
- 8: exhaust heat recovered water passage
- 9: hot water tank
- 10: second water pump
- 11: cooling water passage
- 12: cooling water tank
- 13: water level detector
- 14A: first recovered water tank
- 14B: second recovered water tank
- 15A: water level detector
- 15B: water level detector
- 16: first water pump
- 17: purifier
- 18: first water discharge passage
- 19: exhaust unit
- 20: first water discharge valve
- 21: first connection passage
- 21a: upstream portion
- 21b: midstream portion
- 21c: downstream portion
- 22: second water discharge passage
- 23: fifth water discharge valve
- 24: first branched passage
- 25: second water discharge passage
- 26: second water discharge valve
- 27: third water discharge valve
- 28: second connection passage
- 29: command acquiring unit
- 29a: display portion
- 29b: input portion
- 30: controller
- 31: oxidizing gas discharge passage
- 32: fuel gas discharge passage
- 33: first temperature detector
- 35: second temperature detector
- 36: heater
- 37: gas venting unit
- 38: gas venting unit
- 39: fourth water discharge valve
- 41: third water discharge passage
- 42: fourth water discharge passage
- 43: fifth on-off valve
- 45: fourth water pump
- 46: third on-off valve
- 47: fourth on-off valve
- 48: branched passage
- 49: communication passage
- 50: reforming water passage
- 51: filter
- 52: first on-off valve
- 53: second on-off valve
- 70: casing
- 100: fuel cell system
- 101: hydrogen generator

## Claims

1. A method for removing water of a fuel cell system,
the fuel cell system including: a fuel cell (1); a water circulation passage (11, 12, 21, 28) through which water circulates, the water being necessary for an operation of the fuel cell system; a separation mechanism (12) configured to divide the water circulation passage into a plurality of blocks when removing the water and to divide the water in the water circulation passage among the blocks; water discharge passages (18, 22, 25) respectively connected to the blocks; and water discharge valves (20, 26, 27, 39) respectively provided on the water discharge passages,
the method comprising at least one of the steps of:
removing the water from only one or more blocks among the plurality of blocks of the water circulation passage by opening the water discharge valve(s) of the water discharge passage(s) (18, 22, 25) connected to said one or more blocks, said one or more blocks being blocks in each of which a part requiring maintenance is provided; and
removing the water from only one or more blocks among the plurality of blocks of the water circulation passage by opening the water discharge valve(s) of the water discharge passage(s) (18, 22, 25) connected to said one or more blocks, said one or more blocks being blocks in each of whose abnormality is detected,
the water circulation passage includes a hot water tank (9) configured to store the water having recovered exhaust heat of the fuel cell and a water passage through which water flows, the water being taken out from the hot water tank, recovering the exhaust heat of the fuel cell, and returning to the hot water tank;
the separation mechanism includes a first on-off valve (52) provided on a portion, through which the water having not yet recovered the exhaust heat of the fuel cell flows, of the water passage, and a second on-off valve (53) provided on a portion, through which the water having recovered the exhaust heat of the fuel cell flows, of the water passage;
the water discharge passages include a first water discharge passage (41) provided at the water passage and a second water discharge passage (42) provided at the hot water tank;
the water discharge valves includes a first water discharge valve (27) provided on the first water discharge passage and a second water discharge valve (39) provided on the second water discharge passage; and
the fuel cell system further includes a first abnormality detector (35) provided on the water passage to detect an abnormality of the water passage and a second abnormality detector provided on the hot water tank to detect an abnormality of the hot water tank,
the method further comprising the steps of:
when the abnormality of the water passage is detected, closing the first on-off valve (52) and the second on-off valve (53) and opening the first water discharge valve to remove only the water in the water passage; and
when the abnormality of the hot water tank (9) is detected, closing the first on-off valve and the second on-off valve and opening the second water discharge valve to remove only the water in the hot water tank.

2. The method according to claim 1, further comprising the step of opening all the water discharge valves (20, 26, 27, 39) to remove the water from all the blocks of the water circulation passage in at least one of a case where there is a possibility of freezing of the water circulation passage and a case where the fuel cell system is set to a resting state.

3. A fuel cell system including a fuel cell,
the fuel cell system comprising:
a water circulation passage (11, 12, 21, 28) through which water circulates, the water being necessary for an operation of the fuel cell system;
a separation mechanism (12) configured to divide the water circulation passage into a plurality of blocks when removing the water and to divide the water in the water circulation passage among the blocks;
water discharge passages (18, 22, 25) respectively connected to the blocks; and
water discharge valves (20, 26, 27, 39) respectively provided on the water discharge passages,
wherein the plurality of blocks includes at least one of a block in which a part requiring maintenance is provided and a block whose abnormality is detectable,
the water circulation passage includes
a hot water tank (9) configured to store the water having recovered exhaust heat of the fuel cell system, and
a water passage through which water flows, the water being taken out from the hot water tank, recovering the exhaust heat of the fuel cell system, and returning to the hot water tank; and
the separation mechanism includes
a first on-off valve (52) provided on a portion, through which the water having not yet recovered the exhaust heat of the fuel cell system flows, of the water passage and
a second on-off valve (53) provided on a portion, through which the water having recovered the exhaust heat of the fuel cell system flows, of the water passage
the water discharge passages include
a first water discharge passage (41) provided at the water passage, and
a second water discharge passage (42) provided at the hot water tank; and
the water discharge valves include a first water discharge valve (27) provided on the third water discharge passage and a second water discharge valve (39) provided on the fourth water discharge passage,
the fuel cell system further comprising:
a first abnormality detector provided on the water passage to detect an abnormality of the water passage; and
a second abnormality detector provided on the hot water tank to detect an abnormality of the hot water tank,
the fuel cell system further comprising:
a controller for controlling the first on-off valve, the second on-off valve, the first water discharge valve and the second water discharge valve,
the controller is configured to, when the abnormality of the water passage is detected, close the first on-off valve (52) and the second on-off valve (53) and open the first water discharge valve to remove only the water in the water passage; and
the controller is configured to, when the abnormality of the hot water tank (9) is detected, close the first on-off valve and the second on-off valve and open the second water discharge valve to remove only the water in the hot water tank.

4. The fuel cell system according to claim 3, wherein:
the water circulation passage includes
a second water tank configured to store recovered water recovered from an exhaust gas of the fuel cell,
a first water tank configured to store, as cooling water for cooling the fuel cell, purified water obtained by purifying the recovered water,
a first connection passage (21) connecting the first water tank and the second water tank,
a first branched passage (24) branching from the first connection passage, and
a third water discharge valve (23) provided on the first branched passage;
a purifier (17) is provided on the first connection passage; and
the first branched passage (24) is configured such that the water in the block including the purifier and the second water tank is removed by opening the third water discharge valve.

5. The fuel cell system according to claim 4, wherein the second water tank is provided above the purifier (17),
the fuel cell system further comprising:
a water level detector (15B) configured to detect a water level in the second water tank;
wherein the controller (30) is configured to open the third water discharge valve to remove the water in the block including the purifier and the second water tank, and in a water filling operation performed after completion of the removal of the water in the above block, detect completion of water filling of the purifier by an increase in the water level detected by the water level detector.

6. The fuel cell system according to claim 4, further comprising:
a water level detector (15B) configured to detect a water level in the first water tank;
wherein the controller (30) is configured to open the third water discharge valve to remove the water in the block including the purifier and the second water tank, and in a water filling operation performed after completion of the removal of the water in the above block, detect completion of water filling of the purifier by an increase in the water level detected by the water level detector.

7. The fuel cell system according to claim 4, further comprising a water pump (16) provided on the first connection passage to cause the recovered water in the second water tank to flow to the first water tank, wherein
the first branched passage (24) branches from a portion of the first connection passage, the portion being located on the purifier side of the water pump.

8. The fuel cell system according to any one of claims 4 to 7, further comprising a second connection passage (28) through which the water having overflowed from the first water tank returns to the second water tank, wherein:
the second water tank is open to the atmosphere; and
the first water tank is open to the atmosphere through the second connection passage and the second water tank.

9. The fuel cell system according to any one of claims 3 to 8, further comprising:
a command acquiring unit (29) configured to receive a set command of one or more blocks among the plurality of blocks of the water circulation passage by a manual operation of an operator, said one or more blocks being subjected to a water removing process;
wherein the controller (30) is configured to open the water discharge valve provided on the water discharge passage connected to said one or more blocks, which is/are subjected to the water removing process based on the command of the command acquiring unit, such that the water is discharged from the water discharge passage.

10. The fuel cell system according to any one of claims 3 to 8, further comprising:
a command acquiring unit (29) configured to receive a set command of one or more blocks among the plurality of blocks of the water circulation passage by a manual operation of an operator, said one or more blocks being subjected to a water removing process;
wherein the controller (30) is configured to start detecting an abnormality of the water removing process corresponding to said one or more blocks which is/are subjected to the water removing process based on the command of the command acquiring unit.

11. The fuel cell system according to claim 10, further comprising:
a water tank provided on the block; and
a water level detector (15B) configured to detect a water level in the water tank, wherein
the controller (30) is configured to detect the abnormality based on the water level detected by the water level detector.

## Patentansprüche

1. Verfahren zum Entfernen von Wasser aus einem Brennstoffzellensystem,
wobei das Brennstoffzellensystem beinhaltet: eine Brennstoffzelle (1); einen Wasserzirkulationskanal (11, 12, 21, 28), durch den Wasser zirkuliert, wobei das Wasser für einen Betrieb des Brennstoffzellensystems notwendig ist; einen Trennungsmechanis-mus (12), der dazu konfiguriert ist, den Wasserzirkulationskanal in eine Vielzahl von Blöcken beim Entfernen des Wassers zu unterteilen und das Wasser in dem Wasserzirkulationskanal unter den Blöcken aufzuteilen; Wasserablasskanäle (18, 22, 25), die jeweils mit den Blöcken verbunden sind; und Wasserablassventile (20, 26, 27, 39), die jeweils an den Wasserablasskanälen bereitgestellt sind,
wobei das Verfahren mindestens einen der folgenden Schritte umfasst:
Entfernen des Wassers aus nur einem oder mehreren Blöcken unter der Vielzahl von Blöcken des Wasserzirkulationskanals durch Öffnen des/der Wasserablassventil(e) (18, 22, 25), das/die mit dem einen oder mehreren Blöcken verbunden ist/sind, wobei die einen oder mehreren Blöcke Blöcke sind, in welchen jeweils ein Teil bereitgestellt ist, der Wartung erfordert; und
Entfernen des Wassers aus nur einem oder mehreren Blöcken unter der Vielzahl von Blöcken des Wasserzirkulationskanals durch Öffnen des/der Wasserablassventil(e) (18, 22, 25), das/die mit dem einen oder mehreren Blöcken verbunden ist/sind, wobei die einen oder mehreren Blöcke Blöcke sind, in welchen jeweils Abnormalität ermittelt wird,
wobei der Wasserzirkulationskanal einen Warmwassertank (9) aufweist, der dazu konfiguriert ist, das Wasser zu speichern, das die Abwärme der Brennstoffzelle wiedergewonnen hat, und einen Wasserkanal, durch den Wasser fließt, wobei das Wasser aus dem Warmwassertank genommen wird, die Abwärme aus der Brennstoffzelle wiedergewinnt und in den Wassertank zurückgeführt wird;
wobei der Trennungsmechanismus ein erstes Schaltventil (52) aufweist, das an einem Abschnitt des Wasserkanals vorgesehen ist, durch den Wasser fließt, welches die Abwärme der Brennstoffzelle noch nicht wiedergewonnen hat, und ein zweites Schaltventil (53), das an einem Abschnitt des Wasserkanals bereitgestellt ist, durch den das Wasser fließt, das die Abwärme der Brennstoffzelle wiedergewonnen hat;
wobei die Wasserablasskanäle einen ersten Wasserablasskanal (41) aufweisen, der an dem Wasserkanal bereitgestellt ist, und einen zweiten Wasserablasskanal (42), der an dem Warmwassertank bereitgestellt ist;
wobei die Wasserablassventile ein erstes Wasserablassventil (27) aufweisen, das an dem ersten Wasserablasskanal bereitgestellt ist, und ein zweites Wasserablassventil (39), das an dem zweiten Wasserablasskanal bereitgestellt ist; und
wobei das Brennstoffzellensystem des Weiteren einen ersten Abnormalitätsdetektor (35) aufweist, der an dem Wasserkanal bereitgestellt ist, um eine Abnormalität des Wasserkanals zu ermitteln und einen zweiten Abnormalitätsdetektor, der an dem Warmwassertank bereitgestellt ist, um eine Abnormalität des Warmwassertanks zu ermitteln,
wobei das Verfahren des Weiteren folgende Schritte umfasst:
wenn die Abnormalität des Wasserkanals ermittelt wird, Schließen des ersten Schaltventils (52) und des zweiten Schaltventils (53) und Öffnen des ersten Wasserablassventils, um nur das Wasser in dem Wasserkanal zu entfernen; und
wenn die Abnormalität des Warmwasserkanals (9) ermittelt wird, Schließen des ersten Schaltventils und Öffnen des zweiten Wasserablassventils, um nur das Wasser in dem Warmwassertank zu entfernen.

2. Verfahren nach Anspruch 1, des Weiteren umfassend den Schritt zum Öffnen aller Wasserablassventile (20, 26, 27, 39), um das Wasser aus allen Blöcken des Wasserzirkulationskanals in mindestens einem aus einem Fall zu entfernen, in dem eine Möglichkeit des Einfrierens des Wasserzirkulationskanals besteht und einem Fall, in dem das Brennstoffzellensystem in einen Ruhezustand versetzt wird.

3. Brennstoffzellensystem, das eine Brennstoffzelle aufweist,
wobei das Brennstoffzellensystem umfasst:
einen Wasserzirkulationskanal (11, 12, 21, 28), durch den Wasser zirkuliert, wobei das Wasser für einen Betrieb des Brennstoffzellensystems notwendig ist;
einen Trennungsmechanismus (12), der dazu konfiguriert ist, den Wasserzirkulationskanal in eine Vielzahl von Blöcken beim Entfernen des Wassers zu unterteilen und das Wasser in dem Wasserzirkulationskanal unter den Blöcken aufzuteilen;
Wasserablasskanäle (18, 22, 25), die jeweils mit den Blöcken verbunden sind; und
Wasserablassventile (20, 26, 27, 39), die jeweils an den Wasserablasskanälen bereitgestellt sind,
wobei die Vielzahl von Blöcken mindestens einen Block aufweist, in dem ein Teil bereitgestellt ist, der Wartung erfordert und ein Block, dessen Abnormalität ermittelbar ist,
wobei der Wasserzirkulationskanal beinhaltet
einen Warmwassertank (9), der dazu konfiguriert ist, das Wasser zu speichern, das die Abwärme der Brennstoffzelle wiedergewonnen hat, und
einen Wasserkanal, durch den Wasser fließt, wobei das Wasser aus dem Warmwassertank genommen wird, die Abwärme aus der Brennstoffzelle wiedergewinnt und in den Wassertank zurückgeführt wird; und
wobei der Trennungsmechanismus beinhaltet
ein erstes Schaltventil (52), das an einem Abschnitt des Wasserkanals vorgesehen ist, durch den Wasser fließt, welches die Abwärme der Brennstoffzelle noch nicht wiedergewonnen hat, und
ein zweites Schaltventil (53), das an einem Abschnitt des Wasserkanals bereitgestellt ist, durch den das Wasser fließt, das die Abwärme der Brennstoffzelle wiedergewonnen hat,
wobei der Wasserablasskanal beinhaltet
einen ersten Wasserablasskanal (41), der an dem Wasserkanal bereitgestellt ist, und
einen zweiten Wasserablasskanal (42), der an dem Warmwassertank bereitgestellt ist; und
wobei die Wasserablassventile ein erstes Wasserablassventil (27) aufweisen, das an dem dritten Wasserablasskanal bereitgestellt ist, und ein zweites Wasserablassventil (39), das an dem vierten Wasserablasskanal bereitgestellt ist; und
wobei das Brennstoffzellensystem des Weiteren umfasst:
einen ersten Abnormalitätsdetektor, der an dem Wasserkanal bereitgestellt ist, um eine Abnormalität des Wasserkanals zu ermitteln; und
einen zweiten Abnormalitätsdetektor, der an dem Warmwassertank bereitgestellt ist, um eine Abnormalität des Warmwassertanks zu ermitteln,
wobei das Brennstoffzellensystem des Weiteren umfasst:
einen Regler zum Regeln des ersten Schaltventils, des zweiten Schaltventils, des ersten Wasserablassventils und des zweiten Wasserablassventils,
wobei der Regler dazu konfiguriert ist, wenn die Abnormalität des Wasserkanals ermittelt wird, das erste Schaltventil (52) und das zweite Schaltventil (53) zu schließen und das erste Wasserablassventil zu öffnen, um nur das Wasser in dem Wasserkanal zu entfernen; und
der Regler dazu konfiguriert ist, wenn die Abnormalität des Warmwasserkanals (9) ermittelt wird, das erste Schaltventil und das zweite Schaltventil zu schließen und das zweite Wasserablassventil zu öffnen, um nur das Wasser in dem Warmwassertank zu entfernen.

4. Brennstoffzellensystem nach Anspruch 3, wobei:
der Wasserzirkulationskanal beinhaltet
einen zweiten Wassertank, der dazu konfiguriert ist, wiedergewonnenes Wasser zu speichern, das aus dem Abgas der Brennstoffzelle wiedergewonnen wurde,
einen ersten Wassertank, der dazu konfiguriert ist, als Kühlwasser zum Kühlen der Brennstoffzelle gereinigtes Wasser zu speichern, das durch Reinigen des wiedergewonnenen Wassers erhalten wird,
einen ersten Verbindungskanal (21), der den ersten Wassertank und den zweiten Wassertank verbindet,
einen ersten Zweigkanal (24), der von dem ersten Verbindungskanal abzweigt, und
ein drittes Wasserablassventil (23), das an dem ersten Zweigkanal bereitgestellt ist;
wobei ein Reiniger (17) an dem ersten Verbindungskanal bereitgestellt ist; und
wobei der erste Zweigkanal (24) so konfiguriert ist, dass das Wasser in dem Block, der den Reiniger enthält, und in dem zweiten Wassertank durch Öffnen des dritten Wasserablassventils entfernt wird.

5. Brennstoffzellensystem nach Anspruch 4, wobei der zweite Wassertank über dem Reiniger (17) angeordnet ist,
wobei das Brennstoffzellensystem des Weiteren umfasst:
einen Wasserstandsdetektor (15B), der dazu konfiguriert ist, einen Wasserstand in dem zweiten Wassertank zu ermitteln;
wobei der Regler (30) dazu konfiguriert ist, das dritte Wasserablassventil zu öffnen, um das Wasser in dem Block, der den Reiniger enthält, und dem zweiten Wassertank zu entfernen, und in einem Wassereinfüllvorgang, der nach Abschluss der Entfernung des Wassers in dem obigen Block durchgeführt wird, einen Abschluss der Wasserbefüllung des Reinigers durch einen Anstieg des Wasserstands zu ermitteln, der durch den Wasserstandsdetektor ermittelt wird.

6. Brennstoffzellensystem nach Anspruch 4, des Weiteren umfassend:
einen Wasserstandsdetektor (15B), der dazu konfiguriert ist, einen Wasserstand in dem ersten Wassertank zu ermitteln;
wobei der Regler (30) dazu konfiguriert ist, das dritte Wasserablassventil zu öffnen, um das Wasser in dem Block, der den Reiniger enthält, und dem zweiten Wassertank zu entfernen, und in einem Wassereinfüllvorgang, der nach Abschluss der Entfernung des Wassers in dem obigen Block durchgeführt wird, einen Abschluss der Wasserbefüllung des Reinigers durch einen Anstieg des Wasserstands zu ermitteln, der durch den Wasserstandsdetektor ermittelt wird.

7. Brennstoffzellensystem nach Anspruch 4, des Weiteren umfassend eine Wasserpumpe (16), die an dem ersten Verbindungskanal angeordnet ist, um zu bewirken, dass das wiedergewonnene Wasser in dem zweiten Wassertank in den ersten Wassertank fließt, wobei
der erste Zweigkanal (24) von einem Abschnitt des ersten Verbindungskanals abzweigt, wobei der Abschnitt auf der Reinigerseite der Wasserpumpe angeordnet ist.

8. Brennstoffzellensystem nach einem der Ansprüche 4 bis 7, des Weiteren umfassend einen zweiten Verbindungskanal (28), durch den Wasser, das aus dem ersten Wassertank übergeflossen ist, in den zweiten Wassertank rückgeführt wird, wobei:
der zweite Wassertank zur Umgebung hin offen ist; und
der erste Wassertank durch den zweiten Verbindungskanal und den zweiten Wassertank zur Umgebung hin offen ist.

9. Brennstoffzellensystem nach einem der Ansprüche 3 bis 8, des Weiteren umfassend:
eine Befehlserfassungseinheit (29), die dazu konfiguriert ist, einen Einstellungsbefehl von einem oder mehreren Blöcken aus der Vielzahl von Blöcken des Wasserzirkulationskanals durch eine manuelle Eingabe eine Bedienungsperson zu empfangen, wobei die einen oder mehreren Blöcke einem Wasserentfernungsprozess unterzogen werden;
wobei der Regler (30) dazu konfiguriert ist, das Wasserablassventil zu öffnen, das an dem Wasserablasskanal bereitgestellt ist, der mit dem einen oder den mehreren Blöcken verbunden ist, der/die dem Wasserentfernungsprozess unterzogen wird/werden, basierend auf dem Befehl der Befehlserfassungseinheit, so dass das Wasser aus dem Wasserablasskanal abgelassen wird.

10. Brennstoffzellensystem nach einem der Ansprüche 3 bis 8, des Weiteren umfassend:
eine Befehlserfassungseinheit (29), die dazu konfiguriert ist, einen Einstellungsbefehl von einem oder mehreren Blöcken aus der Vielzahl von Blöcken des Wasserzirkulationskanals durch eine manuelle Eingabe eine Bedienungsperson zu empfangen, wobei die einen oder mehreren Blöcke einem Wasserentfernungsprozess unterzogen werden;
wobei der Regler (30) dazu konfiguriert ist, die Ermittlung einer Abnormalität des Wasserentfernungsprozesses im Zusammenhang mit dem einen oder den mehreren Blöcken zu starten, der/die dem Wasserentfernungsprozess unterzogen wird/werden, basierend auf dem Befehl von der Befehlserfassungseinheit.

11. Brennstoffzellensystem nach Anspruch 10, des Weiteren umfassend:
einen Wassertank, der an dem Block bereitgestellt ist; und
einen Wasserstandsdetektor (15B), der dazu konfiguriert ist, einen Wasserstand in dem Wassertank zu ermitteln, wobei
der Regler (30) dazu konfiguriert ist, die Abnormalität basierend auf dem durch den Wasserstandsdetektor ermittelten Wasserstand zu ermitteln.

## Revendications

1. Une méthode pour éliminer l'eau d'un système de pile à combustible,
le système de pile à combustible comportant : une pile à combustible (1) ; un passage de circulation d'eau (11, 12, 21, 28) à travers lequel circule l'eau, l'eau étant nécessaire pour un fonctionnement du système de pile à combustible ; un mécanisme de séparation (12) configuré pour diviser le passage de circulation d'eau en plusieurs blocs lors de l'élimination de l'eau et pour diviser l'eau dans le passage de circulation entre les blocs ; des passages d'évacuation d'eau (18, 22, 25) raccordés respectivement aux blocs ; et des vannes d'évacuation d'eau (20, 26, 27, 39) disposées respectivement sur les passages d'évacuation d'eau,
la méthode comprenant au moins une des étapesde :
élimination de l'eau d'un seulement ou plusieurs blocs parmi les plusieurs blocs du passage de circulation d'eau, par ouverture de la ou des vannes d'évacuation du ou des passages d'évacuation d'eau (18, 22, 25) raccordés auxdits un ou plusieurs blocs, lesdits un ou plusieurs blocs étant des blocs dans chacun desquels une pièce nécessitant un entretien est fournie; et
élimination de l'eau d'un seulement ou plusieurs blocs parmi les plusieurs blocs du passage de circulation d'eau, par ouverture de la ou des vannes d'évacuation du ou des passages d'évacuation d'eau (18, 22, 25) raccordés auxdits un ou plusieurs blocs, lesdits un ou plusieurs blocs étant ceux dans chacun desquels une anomalie est détectée,
le passage de circulation d'eau comprend un réservoir d'eau chaude (9) configuré pour stocker l'eau ayant récupéré la chaleur d'échappement de la pile à combustible et un passage d'eau à travers lequel circule l'eau, l'eau étant prélevée du réservoir d'eau chaude, récupérant la chaleur d'échappement de la pile à combustible et revenant au réservoir d'eau chaude ;
le mécanisme de séparation comprend une première vanne d'arrêt (52) disposée sur une portion du passage d'eau, à travers laquelle circule l'eau qui n'a pas encore récupérée la chaleur d'échappement de la pile à combustible, et une deuxième vanne d'arrêt (53) disposée sur une portion du passage d'eau à travers laquelle circule l'eau qui a récupéré la chaleur d'échappement de la pile à combustible;
les passages d'évacuation d'eau comprennent un premier passage d'évacuation d'eau (41) disposé sur le passage d'eau et un deuxième passage d'évacuation d'eau (42) disposé sur le réservoir d'eau chaude ;
les vannes d'évacuation d'eau comprennent une première vanne d'évacuation d'eau (27) disposée sur le premier passage d'évacuation d'eau et une deuxième vanne d'évacuation d'eau (39) disposée sur le deuxième passage d'évacuation d'eau ;
le système de pile à combustible comprend un premier détecteur d'anomalie (35) disposé sur le passage d'eau pour détecter une anomalie du passage d'eau, et un deuxième détecteur d'anomalie disposé sur le réservoir d'eau chaude pour détecter une anomalie du réservoir d'eau chaude,
la méthode comprenant de plus les étapes de :
lorsque l'anomalie du passage d'eau est détectée, fermeture de la première vanne d'arrêt (52) et de la deuxième vanne d'arrêt (53) et ouverture de la première vanne d'évacuation d'eau pour n'éliminer l'eau que dans le passage d'eau ; et
lorsque l'anomalie du réservoir d'eau chaude (9) est détectée, fermeture de la première vanne d'arrêt et de la deuxième vanne d'arrêt et ouverture de la deuxième vanne d'évacuation d'eau pour n'évacuer l'eau que dans le réservoir d'eau chaude.

2. La méthode selon la revendication 1, comprenant de plus l'étape d'ouverture de toutes les vannes d'évacuation d'eau (20, 26, 27, 39) pour évacuer l'eau de tous les blocs du passage de circulation d'eau dans au moins un cas où il existe une possibilité de gel du passage de circulation d'eau et un cas où le système de pile à combustible est réglé à un état de repos.

3. Un système de pile à combustible comprenant une pile à combustible,
le système de pile à combustible comprenant :
un passage de circulation d'eau (11, 12, 21, 28) à travers lequel circule l'eau, l'eau étant nécessaire au fonctionnement du système de pile à combustible ;
un mécanisme de séparation (12) configuré pour diviser le passage de circulation d'eau en plusieurs blocs lors de l'évacuation de l'eau et pour diviser l'eau dans le passage de circulation d'eau parmi les blocs ;
des passages d'évacuation d'eau (18, 22, 25) raccordés respectivement aux blocs ; et
des vannes d'évacuation d'eau (20, 26, 27, 39) disposées respectivement sur les passages d'évacuation d'eau,
où les plusieurs blocs comprennent au moins un bloc dans lequel est disposé une pièce nécessitant un entretien et un bloc dont une anomalie est détectable,
le passage de circulation d'eau comprend
un réservoir d'eau chaude (9) configuré pour stocker l'eau ayant récupéré la chaleur d'échappement du système de pile à combustible, et
un passage d'eau à travers lequel circule l'eau, l'eau étant prélevée du réservoir d'eau chaude, récupérant la chaleur d'échappement du système de pile à combustible et revenant au réservoir d'eau chaude ; et
le mécanisme de séparation comprend
une première vanne d'arrêt (52) disposée sur une portion du passage d'eau à travers laquelle circule l'eau n'ayant pas encore récupéré la chaleur d'échappement du système de pile à combustible, et
une deuxième vanne d'arrêt (53) disposée sur une portion du passage d'eau à travers laquelle circule l'eau ayant récupéré la chaleur d'échappement du système de pile à combustible.
les passages d'évacuation d'eau comprennent
un premier passage d'évacuation d'eau (41) disposé au passage d'eau, et
un deuxième passage d'évacuation d'eau (42) disposé au réservoir d'eau chaude ; et
les vannes d'évacuation d'eau comprennent une première vanne d'évacuation d'eau (27) disposée sur le troisième passage d'évacuation d'eau et une deuxième vanne d'évacuation d'eau (39) disposée sur le quatrième passage d'évacuation d'eau, le système de pile à combustible comprenant de plus :
un premier détecteur d'anomalie disposé sur le passage d'eau pour détecter une anomalie du passage d'eau ; et un deuxième détecteur d'anomalie disposé sur le réservoir d'eau chaude pour détecter une anomalie du réservoir d'eau chaude,
le système de pile à combustible comprenant de plus :
un contrôleur pour controler la première vanne d'arrêt, la deuxième vanne d'arrêt, la première vanne d'évacuation d'eau et la deuxième vanne d'évacuation d'eau,
le contrôleur est configuré pour, lorsque l'anomalie du passage d'eau est détectée, fermer la première vanne d'arrêt (52) et la deuxième vanne d'arrêt (53) et ouvrir la première vanne d'évacuation pour n'évacuer l'eau que dans le passage d'eau ; et
le contrôleur est configuré pour, lorsque l'anomalie du réservoir d'eau chaude (9) est détectée, fermer la première vanne d'arrêt et la deuxième vanne d'arrêt et ouvrir la deuxième vanne d'évacuation d'eau pour n'évacuer l'eau que dans le réservoir d'eau chaude.

4. Le système de pile à combustible selon la revendication 3, dans lequel :
le passage de circulation d'eau comprend
un deuxième réservoir d'eau configuré pour stocker l'eau récupérée d' un gaz d'échappement de la pile à combustible,
un premier réservoir d'eau configuré pour stocker, en tant qu'eau de refroidissement pour le refroidissement de la pile à combustible, l'eau purifiée obtenue en purifiant l'eau récupérée,
un premier passage de raccordement (21) raccordant le premier réservoir d'eau et le deuxième réservoir d'eau, un premier passage en dérivation (24) dérivé à partir du premier passage de raccordement, et
une troisième vanne d'évacuation d'eau (23) disposée sur le premier passage dérivé ;
un purificateur (17) est disposé sur le premier passage de raccordement ; et
le premier passage dérivé (24) est configuré de façon que l'eau dans le bloc incluant le purificateur et le deuxième réservoir d'eau est évacuée par ouverture de la troisième vanne d'évacuation d'eau.

5. Le système de pile à combustible selon la revendication 4, dans lequel le deuxième réservoir d'eau est disposé au-dessus du purificateur (17),
le système de pile à combustible comprenant de plus :
un détecteur de niveau d'eau (15B) configuré pour détecter un niveau d'eau dans le deuxième réservoir d'eau ;
dans lequel le contrôleur (30) est configuré pour ouvrir la troisième vanne d'évacuation d'eau pour évacuer l'eau dans le bloc incluant le purificateur et le deuxième réservoir d'eau, et dans une opération de remplissage d'eau effectuée après l'achèvement de l'élimination de l'eau dans le bloc ci-dessus, détecter l'achèvement du remplissage d'eau du purificateur par une augmentation du niveau d'eau détectée par le détecteur de niveau d'eau.

6. Le système de pile à combustible selon la revendication 4, comprenant de plus :
un détecteur de niveau d'eau (15B) configuré pour détecter un niveau d'eau dans le premier réservoir d'eau ;
dans lequel le contrôleur (30) est configuré pour ouvrir la troisième vanne d'évacuation d'eau pour évacuer l'eau dans le bloc comprenant le purificateur et le deuxième réservoir d'eau, et dans une opération de remplissage d'eau effectuée après l'achèvement de l'élimination de l'eau dans le bloc ci-dessus, détecter l'achèvement du remplissage d'eau du purificateur par une augmentation du niveau d'eau détectée par le détecteur de niveau d'eau.

7. Le système de pile à combustible selon la revendication 4, comprenant de plus une pompe à eau (16) disposée sur le premier passage de raccordement pour faire circuler l'eau récupérée dans le deuxième réservoir d'eau vers le premier réservoir d'eau, dans lequel
le premier passage en dérivation (24) est dérivé depuis une portion du premier passage de raccordement, la portion étant située sur le côté du purificateur de la pompe à eau.

8. Le système de pile à combustible selon une des revendications 4 à 7, comprenant de plus un deuxième passage de raccordement (28) à travers lequel l'eau ayant débordé du premier réservoir d'eau retourne au deuxième réservoir d'eau, dans lequel :
le deuxième réservoir d'eau est ouvert à l'atmosphère ; et
le premier réservoir d'eau est ouvert à l'atmosphère à travers le deuxième passage de raccordement et le deuxième réservoir d'eau.

9. Le système de pile à combustible selon une des revendications 3 à 8, comprenant de plus :
une unité d'acquisition de commande (29) configurée pour recevoir une commande définie d'un ou plusieurs blocs parmi les plusieurs blocs du passage de circulation d'eau par une action manuelle d'un opérateur, lesdits un ou plusieurs blocs étant soumis à une procédure d'évacuation d'eau ;
dans lequel le contrôleur (30) est configuré pour ouvrir la vanne d'évacuation d'eau disposée sur le passage d'évacuation d'eau raccordé auxdits un ou plusieurs blocs, soumis à la procédure d'évacuation d'eau en fonction de la commande de l'unité d'acquisition de commande, de façon que l'eau soit évacuée du passage d'évacuation d'eau.

10. Le système de pile à combustible selon une des revendications 3 à 8, comprenant de plus :
une unité d'acquisition de commande (29) configurée pour recevoir une commande définie d'un ou plusieurs blocs parmi les plusieurs blocs du passage de circulation d'eau par une action manuelle d'un opérateur, lesdits un ou plusieurs blocs étant soumis à une procédure d'évacuation d'eau ;
dans lequel le contrôleur (30) est configuré pour commencer à détecter une anomalie de la procédure d'évacuation d'eau correspondant auxdits un ou plusieurs blocs, soumis à la procédure d'évacuation d'eau en fonction de la commande de l'unité d'acquisition de commande.

11. Le système de pile à combustible selon la revendication 10, comprenant de plus :
un réservoir d'eau disposé sur le bloc ; et
un détecteur de niveau d'eau (15B) configuré pour détecter un niveau d'eau dans le réservoir d'eau, dans lequel le contrôleur (30) est configuré pour détecter l'anomalie en fonction du niveau d'eau détecté par le détecteur de niveau d'eau.
